# FASCICULE DE BREVET EUROPEEN

(11) **EP 3 847 408 B1**
(45) Date de publication et mention de la délivrance du brevet: **19.01.2022**
(21) Numéro de dépôt: 19762191.5
(22) Date de dépôt: 25.07.2019
(51) Int. Cl.: F28D 7/12, F28D 7/00, F28D 21/00, F28F 21/06, F24T 10/17

(54) **ÉCHANGEUR THERMIQUE FLEXIBLE DESTINÉ À ÊTRE DISPOSÉ DANS UN FLUIDE EXTÉRIEUR EN MOUVEMENT, COMPRENANT UN ASSEMBLAGE DE SONDES THERMIQUES FLEXIBLES**
FLEXIBLER WÄRMETAUSCHER ZUR POSITIONIERUNG IN EINEM SICH BEWEGENDEN ÄUSSEREN FLUID MIT EINER SAMMLUNG VON FLEXIBLEN TEMPERATURFÜHLERN
FLEXIBLE HEAT EXCHANGER INTENDED TO BE POSITIONED IN A MOVING EXTERIOR FLUID, COMPRISING A COLLECTION OF FLEXIBLE TEMPERATURE PROBES

(30) Priorité: 06.09.2018 FR 1858012
(43) Date de publication de la demande: 14.07.2021
(73) Titulaire: Université Gustave Eiffel, 77420 Champs-sur-Marne (FR); Université de Paris, 75006 Paris (FR); Centre National de la Recherche Scientifique, 75016 Paris (FR)
(72) Inventeur: GUO, Xiaofeng, 94300 VINCENNES (FR)
(74) Mandataire: A.P.I. Conseil
(86) Numéro de dépôt international: PCT/FR2019/051851
(87) Numéro de publication internationale: WO 2020/049233

(56) Documents cités:
- WO-A1-82/02935
- WO-A1-2005/078369
- WO-A1-2012/050454
- GB-A- 2 482 437
- US-A1- 2009 025 902

## Description

L'invention concerne le domaine de la récupération d'énergie, et plus particulièrement des échangeurs thermiques en contact avec un fluide extérieur. L'invention concerne un échangeur thermique destiné à être disposé dans un fluide extérieur en mouvement, un ensemble intégrant l'échangeur thermique, une utilisation de l'échangeur thermique ainsi qu'un procédé de fabrication de l'échangeur thermique.

### [Art antérieur]

La nécessité de réduire la consommation énergétique et les émissions des gaz à effet de serre ont conduit à limiter le gaspillage énergétique et à tirer parti au maximum de l'énergie thermique disponible dans un système, plutôt que de produire ou d'acheter de l'énergie thermique. En effet, dans de nombreux systèmes, il y a un flux de chaleur ou de froid qui n'est pas exploité alors que des échangeurs de chaleur pourraient être utilisés pour valoriser ce différentiel en chauffant ou en refroidissant un flux différent du système.

Sur la base de ce principe, les échangeurs de chaleurs en contact avec un fluide extérieur sont utilisés dans de très nombreuses applications que cela soit pour du réchauffement ou du refroidissement. Un échangeur de chaleur est un équipement pour transférer la chaleur d'un fluide à un autre. Ainsi un échangeur de chaleur permet de chauffer un fluide froid ou au contraire de refroidir un fluide chaud jusqu'à une température requise. Un échangeur présente généralement l'avantage de permettre ce transfert de chaleur sans mélanger les fluides.

Les échangeurs de chaleur en contact avec un fluide extérieur sont également utilisés dans de nombreuses industries, notamment la récupération de chaleurs fatales (issues des eaux usées, eau naturelle, datacenter), l'agroalimentaire (e.g. Vin, bière et produits laitiers), et l'industrie chimique (e.g. raffinement pétrolier). De plus, il y a une utilisation croissante d'échangeurs de chaleur dans les secteurs de la production d'énergie, de l'automobile, du pétrole et du gaz.

Par exemple, dans le traitement des eaux usées, les échangeurs de chaleur en contact avec un fluide extérieur peuvent intervenir dans le maintien de températures optimales dans les digesteurs anaérobies de façon à favoriser la croissance des microorganismes.

Les caractéristiques (e.g. type, taille) de l'échangeur de chaleur utilisé peuvent être adaptées en fonction du type de fluide, de sa température, de sa masse volumique, de sa viscosité et de diverses autres propriétés thermodynamiques. Pour les échanges liquides - liquides, les tubes, les spirales et les échangeurs à plaques sont particulièrement adaptés. Néanmoins, les échangeurs thermiques à tubes présentent généralement un entretien difficile, un faible coefficient d'échange thermique et en outre ils sont volumineux. Les échangeurs thermiques en forme de spirales sont compacts mais de conception coûteuse. Les échangeurs thermiques à plaques sont conçus pour optimiser le transfert de chaleur mais peuvent être sensibles à la corrosion ou à l'encrassement et présentent une perte de charge importante.

Généralement, et en particulier dans le cas de la récupération de chaleur des eaux usées, l'installation d'échangeurs de chaleur traditionnels en contact avec un fluide extérieur par exemple à faisceau tubulaire ou à spirale nécessite de gros travaux de génie civil et un volume libre important. De plus, outre des investissements importants, des travaux de maintenance doivent être effectués régulièrement pour éviter l'encrassement ce qui augmente les coûts d'exploitation. Il est alors nécessaire d'attendre de nombreuses années pour atteindre un retour sur investissement positif. Ainsi, l'industrie est toujours à la recherche de moyens permettant d'augmenter l'efficacité des échangeurs thermiques tout en n'utilisant pas plus de matériel que nécessaire dans un volume aussi réduit que possible.

Pour cela, l'industrie cherche à influer sur les paramètres qui ont le plus d'influence sur l'efficacité de l'échangeur thermique. Par exemple l'efficacité de l'échangeur thermique est grandement dépendante de la superficie d'échange de l'échangeur thermique. Fort de ce constat, le document US2017/0089647 propose d'augmenter cette surface grâce à l'utilisation de fibres tissées.

L'efficacité sera également dépendante du coefficient de transfert de chaleur. Ce dernier est dépendant notamment de l'épaisseur de la surface d'échange, de la conductivité thermique du matériau, des coefficients de convection fluide-paroi et d'un facteur d'encrassement. De façon à maximiser la valeur de la conductivité thermique du matériau, les matériaux utilisés sont généralement des métaux ou des alliages de métaux comme par exemple l'aluminium, l'acier inoxydable, le titane, ou des alliages à base de nickel. A l'heure actuelle, les polymères ne sont généralement pas utilisés dans les échangeurs thermiques en raison du faible coefficient de conduction thermique des principaux polymères.

L'encrassement peut entrainer une forte baisse de l'efficacité de l'échange thermique. Il est en particulier accentué et accéléré en présence de vitesses d'écoulement faibles et est réduit en présence de turbulence avec l'action de friction. Ainsi, les solutions habituelles pour lutter contre l'encrassement sont d'abord le contrôle de qualité de fluides, puis plus généralement une augmentation de la contrainte de cisaillement avant l'entretien régulier des échangeurs en arrêt de fonctionnement. De même, il est préférable d'intégrer un échangeur thermique dans un flux turbulent pour améliorer le coefficient de transfert de chaleur. Par exemple, il a été proposé dans le document US2015/0068740 d'utiliser dans un échangeur thermique une structure génératrice de turbulence disposée le long d'une partie de la longueur du canal d'écoulement externe afin d'introduire une turbulence dans le flux du fluide caloporteur circulant le long du canal d'écoulement externe, améliorant ainsi le transfert d'énergie thermique.

US-A-2009025902, GB-A-2482437 et WO-A-8202935 décrivent d'autres échangeurs thermique.

Malgré ces améliorations, les échangeurs existants restent volumineux, peu efficaces et présentent un risque d'encrassement. En outre, la plupart des projets de récupération de chaleur nécessitent des investissements et des dépenses d'exploitation élevés. En outre, la complexité de certains milieux fluidiques de récupération (e.g. les égouts) présente un défi pour l'encrassement des échangeurs conventionnels. Ainsi, il existe un besoin pour de nouveaux échangeurs thermiques.

### [Problème technique]

L'invention a donc pour but de remédier aux inconvénients de l'art antérieur. En particulier, l'invention a pour but de proposer un échangeur thermique destiné à être disposé dans un fluide extérieur en mouvement, présentant une facilité d'installation et de maintenance et donc un faible coût d'investissement et d'exploitation, une forte modularité, un faible encombrement et cela tout en présentant une bonne efficacité de l'échange thermique.

L'invention propose également un procédé de fabrication de l'échangeur thermique rapide et peu couteux.

### [Brève description de l'invention]

A cet effet, l'invention porte sur un échangeur thermique flexible, avantageusement destiné à être disposé dans un fluide extérieur en mouvement, comprenant plusieurs sondes thermiques flexibles montées fluidiquement en parallèle, destinées à être disposées au contact d'un fluide extérieur et à être couplées à des moyens d'entrainement pour permettre la circulation d'un fluide caloporteur dans les sondes thermiques flexibles et un échange de chaleur entre le fluide caloporteur et le fluide extérieur, le débit du fluide caloporteur étant réparti dans les sondes thermiques flexibles dans lequel chaque sonde thermique flexible, de forme longitudinale, est en matériau polymère et présente :
∘ un canal central, ayant une largeur de section transversale de passage de taille centimétrique ou inférieure ;
∘ un ou plusieurs canaux périphériques au canal central, ayant chacun une même section transversale de passage du fluide caloporteur et formés chacun au moins en partie par une paroi d'échange thermique entre le fluide extérieur et le fluide caloporteur,

le ou les canaux périphériques ayant une largeur de la section transversale de passage inférieure à la largeur de la section transversale de passage du canal central,
le débit du fluide caloporteur dans le canal central se répartissant dans les canaux périphériques lorsque la sonde thermique flexible présente plusieurs canaux périphériques;
et en ce que l'échangeur thermique comporte, pour chaque sonde thermique flexible, un embout de raccordement, situé à une extrémité distale de la sonde thermique flexible, et raccordant fluidiquement le canal central et le ou les canaux périphériques, le sens de circulation du fluide caloporteur dans la sonde thermique flexible étant inversé entre le canal central et le ou les canaux périphériques.

De préférence, chaque sonde thermique flexible est en matériau polymère déformable, apte à se déformer notamment sous l'action de l'écoulement du fluide extérieur et/ou de moyens agissant sur chaque sonde thermique, pour que chaque sonde thermique puisse échanger le plus possible d'énergie thermique avec le fluide extérieur, notamment en suivant le mouvement du fluide extérieur ou en se déplaçant le plus possible radialement et/ou axialement dans ce fluide extérieur.

Dans la plupart des systèmes de récupération de chaleur en contact avec un fluide extérieur, l'échangeur de chaleur est l'élément clé pour assurer une efficacité énergétique élevée. L'échangeur thermique selon l'invention est compact et efficace. Ainsi, il simplifie les installations de récupération de chaleur et réduit les coûts. Etant compacte, la solution selon l'invention peut être directement intégrée dans un flux d'eau sans nécessiter l'installation d'une voie de dérivation venant puiser le liquide. Ainsi, l'échangeur selon l'invention peut être installé dans des espaces extrêmement confinés, afin d'augmenter les performances et la capacité d'installations existantes. En outre, l'interaction de mouvements à basse fréquence des sondes thermiques flexibles avec le fluide extérieur ainsi que le rapport surface / volume élevé de l'échangeur thermique selon l'invention permettent d'améliorer l'efficacité de l'échange thermique et lui permettent d'atteindre une performance d'échange thermique au moins similaire à l'existant.

En outre, l'échangeur thermique selon l'invention présente l'avantage d'être facilement adaptable et évolutif. En effet, le nombre et les dimensions des sondes thermiques peuvent être adaptés à la situation et rapidement modifiés en fonction de l'évolution des besoins en capacité. Avantageusement, les sondes thermiques sont identiques. En effet, cela peut permettre un meilleur échange thermique. Néanmoins, elles peuvent être de taille différente si l'application le nécessite.

De plus, la solution selon l'invention est moins sujette aux contraintes, à l'usure et à l'encrassement. En effet, bien que certains polymères ne présentent pas des coefficients de conduction thermique élevés, ils présentent une résistance à la corrosion et un coût de fabrication plus faible que les structures métalliques. Cela est particulièrement le cas si de nouvelles applications d'échangeurs thermiques sont recherchées.

Enfin, la maintenance est facilitée et le changement de pièces endommagées peut se faire rapidement par remplacement d'une ou de plusieurs sondes thermiques avec un travail de nettoyage ou de remplacement des sondes thermiques pouvant être effectué sur site, à l'endroit même où l'unité est installée.

Selon d'autres caractéristiques optionnelles de l'échangeur :
- chaque sonde thermique flexible comporte des entrée et sortie du fluide caloporteur et les entrée et sortie du fluide caloporteur sont positionnées à une même extrémité proximale. Cela permet de faciliter l'installation, l'entretien et l'évolution de l'échangeur.
- le ou les canaux périphériques ont une largeur de taille millimétrique. Une largeur de taille millimétrique est par exemple, inférieure ou égale à 10 millimètres. Cela permet d'augmenter la surface d'échange thermique.
- le ou les canaux périphériques ont une largeur de taille inférieure au millimètre, telle qu'une taille micrométrique. Par exemple d'une centaine ou plusieurs centaines de micromètres. Cela permet d'augmenter la surface d'échange.
- le canal central a une largeur de taille millimétrique ou inférieure. Cela permet d'augmenter l'échange thermique.
- chaque sonde thermique flexible comporte une pluralité de canaux périphériques, chaque canal périphérique ayant une section transversale de passage du fluide caloporteur inférieure à celle du canal central. Cela permet de conserver un débit sensiblement constant et/ou un différentiel de pression sensiblement nul. En particulier, chaque sonde thermique flexible comporte plusieurs canaux périphériques qui sont formés par des tubes flexibles séparés du tube intérieur flexible formant le canal central et disposés autour du tube intérieur flexible formant le canal central, chaque canal périphérique ayant une section transversale de passage du fluide caloporteur inférieure à celle du canal central.
- chaque sonde thermique flexible, est en matériau polymère déformable apte à se déformer suivant des mouvements de basses fréquences inférieures à 100 Hz.
- chaque sonde thermique flexible, est en matériau polymère déformable apte à se déformer en serpentin dans l'écoulement.
- chaque sonde thermique flexible, est en matériau polymère déformable apte à se déformer : en mouvement va-et-vient et/ou en vibrations.
- chaque sonde thermique flexible, est en matériau polymère souple apte à se déformer suivant un déplacement latéral dont le déplacement maximal égal à au moins deux fois le diamètre externe de la sonde thermique.
- l'échangeur thermique comporte des moyens de déplacement des sondes thermiques flexibles pour augmenter la déformation et/ou le déplacement des sondes thermiques dans l'écoulement, ces moyens de déplacement étant : mécaniques, optiques, acoustiques, ou électromagnétiques.
- chaque sonde thermique comporte des canaux périphériques dont le nombre est supérieur ou égal à 6.
- le rapport entre la surface extérieure totale d'échange thermique du canal périphérique et le volume de fluide caloporteur se déplaçant dans le canal périphérique est supérieur ou égal à 100 m²/m³, de préférence supérieur ou égal à 500 m²/m³, de façon plus préférée supérieur ou égal à 1000 m²/m³, et de façon encore plus préférée supérieure ou égal à 2500 m²/m³. Cela permet d'augmenter l'efficacité de l'échange thermique. En effet, plus le rapport est élevé entre la surface extérieure du canal périphérique et le volume du fluide caloporteur plus l'échange thermique est efficace.
- le rapport entre : la surface extérieure totale d'échange thermique du canal périphérique et le volume de fluide caloporteur se déplaçant dans le canal périphérique, est compris entre : 5000 et 20000 m²/m³.
- chaque sonde thermique flexible est associée à un manchon de connexion apte à connecter fluidiquement : le ou les canaux périphériques à un seul premier tube logé dans le manchon de connexion et permettant l'arrivée, ou respectivement la sortie, du fluide caloporteur et le canal central à un seul second tube logé dans le manchon de connexion et permettant la sortie, respectivement l'arrivée, du fluide caloporteur. Le manchon de connexion permet de répartir le fluide caloporteur de façon uniforme et de maintenir un débit sensiblement constant. De façon préférée, chaque sonde thermique flexible peut présenter plusieurs canaux périphériques. La présence de plusieurs canaux périphériques permet d'améliorer l'échange thermique ainsi que la surface d'échange. En outre, le manchon de connexion est particulièrement adapté lorsque la sonde thermique comporte une pluralité de canaux périphériques et permet d'assembler le canal central et les canaux périphériques par emboitement (soudé, collé, vissés....).
- l'échangeur comporte un système de distribution et collection du fluide caloporteur, connecté fluidiquement aux sondes thermiques flexibles, de préférence par l'intermédiaire d'un manchon de connexion, pour faire circuler le fluide caloporteur en parallèle, dans les sondes thermiques flexibles, depuis une entrée principale du système de distribution et collection à une sortie principale du système de distribution et collection. Cela permet de faire circuler en parallèle le fluide caloporteur dans plusieurs sondes thermiques et d'augmenter ainsi la surface d'échange.
- l'épaisseur de chaque paroi d'échange thermique est de taille millimétrique ou inférieure. Le coefficient de conduction thermique des polymères étant faibles, la performance d'échange thermique de l'invention est garantie grâce aux parois très fines.
- le matériau polymère de la sonde thermique flexible a une conductivité thermique inférieure ou égale à 1 W/m.K ou au contraire une conductivité thermique supérieure à 1 W/m.K .
- D'autres polymères avec conductivité thermique plus élevée (dits dopés) peuvent être utilisés exceptionnellement pour des applications particulières.
- la sonde thermique flexible présente deux conduites co-axiales avec une conduite extérieur co-axial à une conduite intérieure, le canal principal étant situé dans la conduite intérieure, et le canal périphérique étant situé entre les parois de la conduite extérieure et les parois de la conduite intérieure. La disposition parallèle permet les entrée et sortie(s) du fluide caloporteur dans la même extrémité de la sonde, en laissant donc l'autre extrémité en mouvement libre dans le fluide extérieur ; avantageusement les conduites sont des tubes (conduite à section circulaire)
- la sonde thermique flexible présente plusieurs conduites extérieures disposées autour d'une conduite intérieur, les canaux périphériques étant situés dans les conduites extérieures, et le canal central étant situé dans la conduite intérieure ; cela permet d'augmenter la surface d'échange ; avantageusement les conduites sont des tubes (conduite à section circulaire)
- chaque sonde thermique flexible comporte des entrée et sortie du fluide caloporteur, et en ce que les entrée et sortie du fluide caloporteur sont positionnées à une même extrémité proximale.
- l'échangeur thermique présente entre 2 et 100 sondes thermiques flexibles.
- les sondes thermiques flexibles sont identiques
- la longueur des sondes thermiques flexibles est comprise entre plusieurs dizaines centimètres et plusieurs mètres.
- les sondes thermiques présentent un ou plusieurs polymères choisi(s) parmi la liste suivante :
   - un élastomère ;
   - un polymère thermoplastique ou thermodurcissable ou à un de leur mélange, tel que du silicone (e.g. polydiméthylsiloxane), du caoutchouc (e.g. polyisoprène), du polyuréthane, une polyoléfine (e.g. basse densité) ou du polystyrène ; et
   - un matériau composite.

En outre, les sondes thermiques peuvent aussi présentent un ou plusieurs polymères fluorés tel que le PTFE (polytetrafluoroethylene).

Selon un autre aspect, l'invention porte sur un ensemble comprenant l'échangeur thermique selon l'invention et une canalisation, de préférence d'eau potable ou d'eaux usées, dans laquelle est disposé l'échangeur thermique.

Selon d'autres caractéristiques optionnelles de l'ensemble, la canalisation présente une seule ouverture permettant de disposer l'échangeur thermique dans l'écoulement d'eau de la canalisation et les entrée et sortie du fluide caloporteur sont positionnées pour toutes les sondes thermiques flexibles à la même extrémité proximale d'une sonde thermique flexible. En outre, la canalisation peut être une canalisation d'eau potable respectivement d'eaux usées, et le fluide extérieur est alors l'eau potable respectivement des eaux usées. Par exemple, la canalisation est une canalisation de bâtiment.

D'autres avantages et caractéristiques de l'invention apparaitront à la lecture de la description suivante donnée à titre d'exemple illustratif et non limitatif, en référence aux Figures annexées qui représentent :

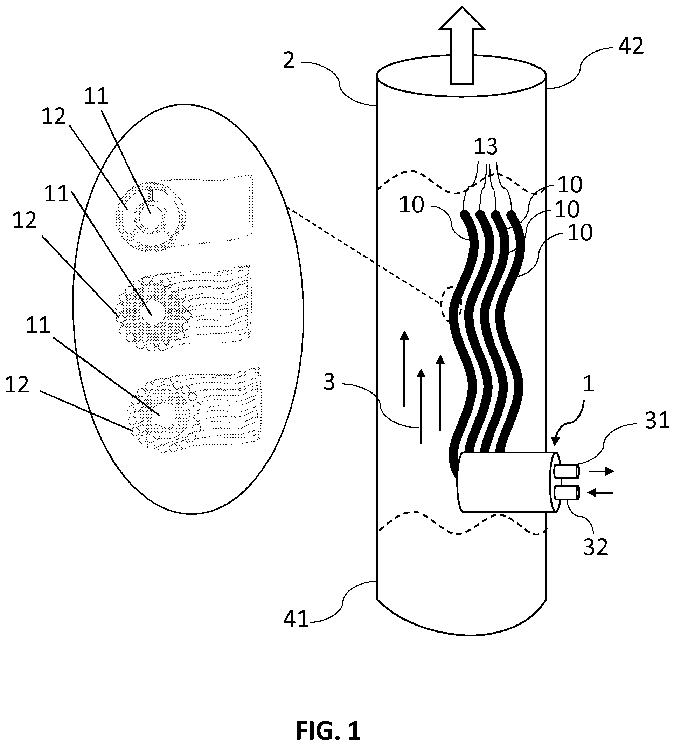

- Figure 1, un schéma d'un mode de réalisation d'un échangeur thermique selon l'invention couplé à une canalisation d'eau potable, avec trois configurations possibles données uniquement comme exemples illustratifs de la section transversale d'une sonde thermiques flexible à savoir : une configuration des canaux co-axiaux par sonde thermique flexible, une configuration comportant vingt canaux périphériques par sonde thermique flexible situés à proximité du canal central, et une autre configuration avec des canaux situés à distance du canal central (étant logés à leur extrémité à un manchon de connexion et un embout de raccordement)
- Figure 2, une vue schématique en vue perspective incluant une coupe transversale d'une sonde thermique flexible selon un mode de réalisation de l'invention.
- Figure 3, une vue schématique en coupe longitudinale d'une sonde thermique flexible selon un mode de réalisation de l'invention, avec plusieurs canaux périphériques identiques ; la flexibilité de la sonde n'a pas été représentée par souci de simplification.
- Figures 4A à 4D, une vue avant et une vue arrière de deux embouts de raccordement selon l'invention.
- Figures 5A à 5C, des vues en perspective de différentes sondes thermiques flexibles selon l'invention.
- Figure 6, une vue schématique en coupe d'un échangeur thermique selon l'invention où la sonde thermique flexible, représentée de façon rectiligne, est associée à un manchon de connexion et à un système de distribution/collection ; la flexibilité des sondes n'a pas été représentée par souci de simplification.
- Figure 7, une vue schématique en coupe d'un manchon de connexion.
- Figures 8A et 8B, des vues schématiques de profil et en coupe d'un système de distribution/collection.
- Figure 9, une vue en coupe d'un système de distribution/collection intégrant les manchons de connexion/embout de raccordement ; la flexibilité des sondes n'a pas été représentée par souci de simplification.

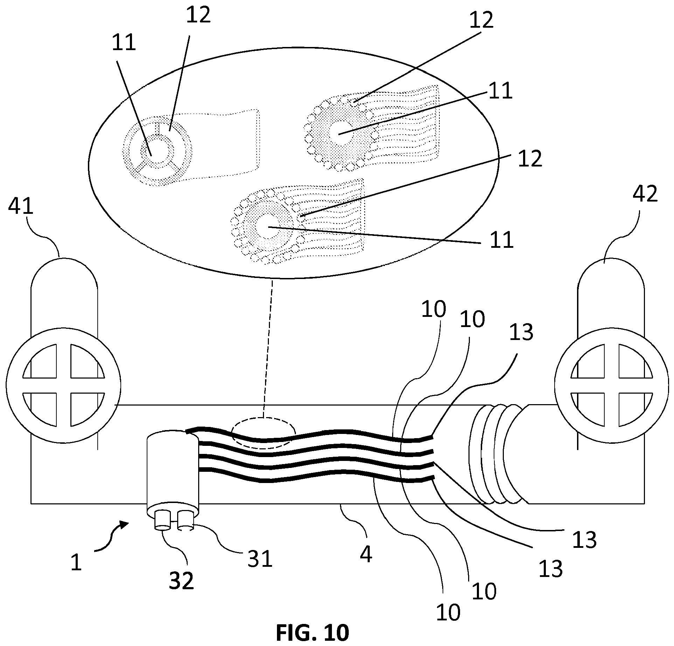

- Figure 10, une représentation schématique d'un système d'eau potable intégrant un échangeur thermique selon l'invention, avec trois configurations possibles données uniquement comme exemples illustratifs de la section transversale d'une sonde thermiques flexible à savoir : une configuration des canaux co-axiaux par sonde thermique flexible, une configuration comportant vingt canaux périphériques par sonde thermique flexible situés à proximité du canal central, et une autre configuration avec des canaux situés à distance du canal central (étant logés à leur extrémité à un manchon de connexion et un embout de raccordement)
- Figure 11 montre les résultats expérimentaux : en gris clair avec mouvement, en gris foncé sans mouvement. Chaque débit représente un même cas d'utilisation ; ici le mouvement des sondes augmente la puissance échangée de 30%.

### [Description de l'invention]

Dans la suite de la description, le terme « flexible » (équivalent de souple) au sens de l'invention correspond à une sonde pouvant être fléchie, courbée et/ou pliée sans rompre ou casser. Une sonde thermique flexible au sens de l'invention possède donc la capacité d'être influencée au moins en partie par les mouvements du fluide extérieur dans lequel elle est positionnée, permettant d'augmenter l'échange thermique avec ce fluide extérieur. L'échangeur thermique qui présente un ensemble de sondes montées fluidiquement en parallèle est dit flexible par abus de langage (même s'il peut compter un autre élément rigide tel qu'un connecteur).

L'expression « matériau polymère » au sens de l'invention correspond à un matériau comprenant un copolymère ou un homopolymère. On entend par « copolymère », un polymère regroupant plusieurs unités monomères différentes et par « homopolymère », un polymère regroupant des unités monomères identiques. Ainsi, un matériau polymère au sens de l'invention peut correspondre à un matériau polymère composite ou alternativement à matériau polymère constitué d'un copolymère ou d'un homopolymère.

L'expression « matériau polymère composite » au sens de l'invention, désigne un matériau multi-composants comprenant au moins deux composants non miscibles dans lequel au moins un composant est un polymère, et l'autre composant, un renfort, peut par exemple être un renfort fibreux ou une charge. Par « renfort fibreux » on entend l'utilisation de fibre de nature minérales ou organiques, tissées ou non tissées, permettant d'améliorer les propriétés mécaniques ou thermiques des sondes. Par exemple, les fibres non-tissées qui peuvent se présenter sous la forme de nanotubes. Par « charges » on entend toutes charges pulvérulentes comme par exemple des particules métalliques ou des charges carbonées telles que du noir de carbone ou des nanotubes de carbone.

Le matériau peut être par ce moyen fonctionnalisé. Par exemple :
- traitement de surface pour limiter l'abrasion, le dépôt de minéraux ou la colonisation par de organismes biologique
- charge : ajuster la rigidité, la densité, optimiser la conductivité thermique :

Le(s) polymère(s) utilisé(s) sont flexibles. Ils peuvent présenter une valeur de module de Young inférieure ou égale à 0,8 GPa, mais il peut aussi être envisagé d'autres valeurs supérieures de module de Young.

L'expression « échanger de la chaleur » au sens de l'invention correspond au transfert de la chaleur entre un premier élément et un second élément, le premier élément ayant une température plus élevée que le second élément cela entraine un refroidissement du premier élément et un échauffement du second. Dans le cadre de l'invention, l'échange de chaleur correspond plus particulièrement au transfert d'une énergie thermique entre le fluide caloporteur et le fluide extérieur. L'énergie thermique peut être initialement portée indifféremment par le fluide caloporteur ou le fluide extérieur.

L'expression « forme longitudinale » au sens de l'invention correspond à une forme qui est dans le sens de la longueur. Une forme longitudinale présente généralement une valeur de longueur au moins deux fois plus grande que sa valeur de largeur.

L'expression « taille centimétrique » au sens de l'invention correspond à un ordre de grandeur de l'ordre de 10⁻² mètre. Par exemple une taille centimétrique ou inférieure correspond à une taille inférieure à 10 cm et peut avoir :
- une valeur de plusieurs centimètres ; ou
- une valeur autour d'un centimètre ; ou
- une valeur inférieure, par exemple de l'ordre d'un à plusieurs millimètres.

L'expression « taille millimétrique » au sens de l'invention est une taille inférieure à 10 millimètres et peut correspondre à une taille d'un à plusieurs millimètres.

L'expression « taille micrométrique » au sens de l'invention correspond à un ordre de grandeur inférieur au millimètre. Par exemple une taille micrométrique peut correspondre à une taille de plusieurs centaines de micromètres, telle que 500 micromètres ou moins.

L'expression « section transversale de passage » au sens de l'invention correspond à la section permettant le passage d'un fluide et est transversale à la longueur des éléments auxquelles elle se rapporte, ici les canaux. Dans le cas où l'écoulement du fluide est dans le sens de la longueur des canaux, cette section transversale de passage est donc perpendiculaire à l'écoulement. La section transversale de passage est une surface et peut donc être exprimée par exemple en mm².

On entend par « co-axial » au sens de l'invention le fait de partager un même axe, et deux conduites, ici tubes, co-axiales sont deux conduites, ici tubes, emboités l'un dans l'autre.

On entend par « largeur » au sens de l'invention la plus petite dimension de la section transversale de passage.

Le mot 'écoulement' désigne soit un écoulement en canalisation soit des mouvements du fluide extérieur par rapport aux sondes thermiques, créant l'application de forces sur ces dernières, qui se déforment du fait de la nature de leur polymère.

On entend par « canal » au sens de l'invention un conduit permettant le passage d'un liquide ou d'un gaz.

Par « sensiblement » on entend au sens de l'invention une valeur variant de moins de 30 % par rapport à la valeur comparée, de préférence de moins de 20 %, de façon encore plus préférée de moins de 10 %.

L'expression « monté fluidiquement » ou « connecté fluidiquement » au sens de l'invention correspond au fait que deux pièces soient agencées de façon à permettre le passage d'un fluide d'une première pièce à une seconde pièce sans qu'il n'y ait de fuite (étanche). L'expression « monté fluidiquement en parallèle » ou « sondes thermiques flexibles parallèles » au sens de l'invention, correspond au fait que trois pièces ou plus sont agencées de façon à ce qu'un fluide provenant d'une première pièce soit réparti de façon homogène entre les pièces (e.g. deuxième et troisième) connectées à cette première pièce. Par exemple, des sondes thermiques flexibles parallèles sont configurées de façon à assurer une répartition homogène du fluide caloporteur entre les sondes thermiques flexibles parallèles.

Le terme « amovible » au sens de l'invention correspond à la capacité à être détachée, enlevée ou démontée aisément sans avoir à détruire des moyens de fixation soit parce qu'il n'y a pas de moyen de fixation soit parce que les moyens de fixation sont aisément et rapidement démontables (e.g. encoche, vis, languette, ergot, clips). Par exemple, par amovible, il faut comprendre que l'objet n'est pas fixé par soudure ou par un autre moyen non prévu pour permettre de détacher l'objet.

On entend par « couplé », au sens de l'invention, assemblé, directement ou indirectement avec un ou plusieurs éléments intermédiaires. Deux éléments peuvent être couplés mécaniquement, ou liés par un canal de communication.

Dans la suite de la description, les mêmes références sont utilisées pour désigner les mêmes éléments.

La Figure 1 illustre schématiquement un échangeur thermique 1 comprenant plusieurs sondes thermiques flexibles 10 représentées parallèles les unes aux autres dans leur position déformée, et ici identiques. L'échangeur thermique 1 y est positionné dans une canalisation 2 dans laquelle circule une eau 3, par exemple de l'eau potable avec laquelle peut être échangée de l'énergie thermique. De façon à faciliter la compréhension, la canalisation 2 comporte une zone en transparence matérialisée par des pointillés. Au travers de cette paroi transparente il est possible de voir les sondes thermiques flexibles 10 qui sont capables de bouger sous l'influence du mouvement de l'eau.

Les plusieurs sondes thermiques flexibles 10 sont plus particulièrement destinées à être disposées au contact d'un fluide extérieur ou immergées dans le fluide extérieur. Le fluide extérieur peut par exemple être un liquide, tel que de l'eau et comme illustré à la figure 1 mais le fluide extérieur peut également être un gaz. Comme cela sera détaillé par la suite, de façon préférée, le fluide extérieur est un liquide.

Le fluide extérieur sert de source froide/chaude au sens de la thermodynamique et les sondes puisent ou cèdent de la chaleur avec l'écoulement en extérieur, de manière réciproque entre le fluide extérieur et le fluide caloporteur par conduction ou rayonnement à travers la paroi des canaux périphériques.

Le fluide extérieur peut par exemple être sélectionné parmi : un milieu aqueux, de l'air, des fluides complexes comme le lait, ou encore des matériaux à changement de phase. Les matériaux à changement de phase sont généralement des composés minéraux, organiques ou encore des mélanges eutectiques. Ils peuvent de préférence être sélectionnés parmi les composés suivants : paraffine, acide formique, acide acétique, phénol, acide dodécanoïque, acétate de sodium trihydraté, hydroxyde de sodium, acide sulfurique, trioxyde de soufre, acide phosphorique ou Gallium.

En outre, le fluide est dit « extérieur » car, il n'est pas mélangé avec le fluide caloporteur et séparé de ce dernier par une paroi.

Le fluide extérieur peut être immobile, ou entrainé et dans cette réalisation son écoulement est libre ou forcé.

Contrairement aux échangeurs thermiques classiques liquide - liquide, liquide - gaz ou gaz - gaz, les moyens d'entrainement du fluide caloporteur de l'échangeur thermique 1 selon l'invention ne sont pas configurés pour permettre la circulation du fluide extérieur.

Néanmoins, le fluide extérieur est avantageusement soumis à un écoulement qui peut être libre ou forcé, ou à des mouvements autour de l'échangeur. Un écoulement forcé est par exemple un écoulement dont le sens et le débit sont influencés par un moyen d'entrainement tel qu'une pompe ou un compresseur.

Les plusieurs sondes thermiques flexibles 10 sont également destinées à être couplées à des moyens d'entrainement pour permettre la circulation d'un fluide caloporteur dans les sondes thermiques flexibles 10. Les moyens d'entrainement sont par exemple sélectionnés parmi des pompes, des compresseurs, des injecteurs, ou encore par gravité.

De façon préférée, l'échangeur thermique présente entre 2 et 100 sondes thermiques flexibles, montées fluidiquement en parallèle. Plus l'échangeur thermique selon l'invention comporte un nombre élevé de sondes thermiques flexibles, plus l'échange thermique sera important. Ainsi, l'échangeur thermique selon l'invention pourrait également comporter entre 2 et 10 000, ou entre 2 et 1 000 sondes thermiques flexibles montées fluidiquement en parallèle. Par exemple, un distributeur pourrait comporter 10 000 sondes thermiques flexibles ou encore, l'échangeur pourrait comporter un premier distributeur disposant de 100 emplacements auxquels seraient couplés 100 autres distributeurs pouvant chacun être couplé à 100 sondes thermiques flexibles 10.

Les sondes thermiques flexibles 10 sont avantageusement montées fluidiquement en parallèle. Comme cela a été explicité, les sondes thermiques flexibles 10 permettent un échange thermique entre le fluide caloporteur et un fluide extérieur. Le fait de monter les sondes thermiques fluidiquement en parallèle permet d'augmenter l'efficacité de l'échangeur thermique. En outre, avantageusement, les sondes thermiques sont identiques.

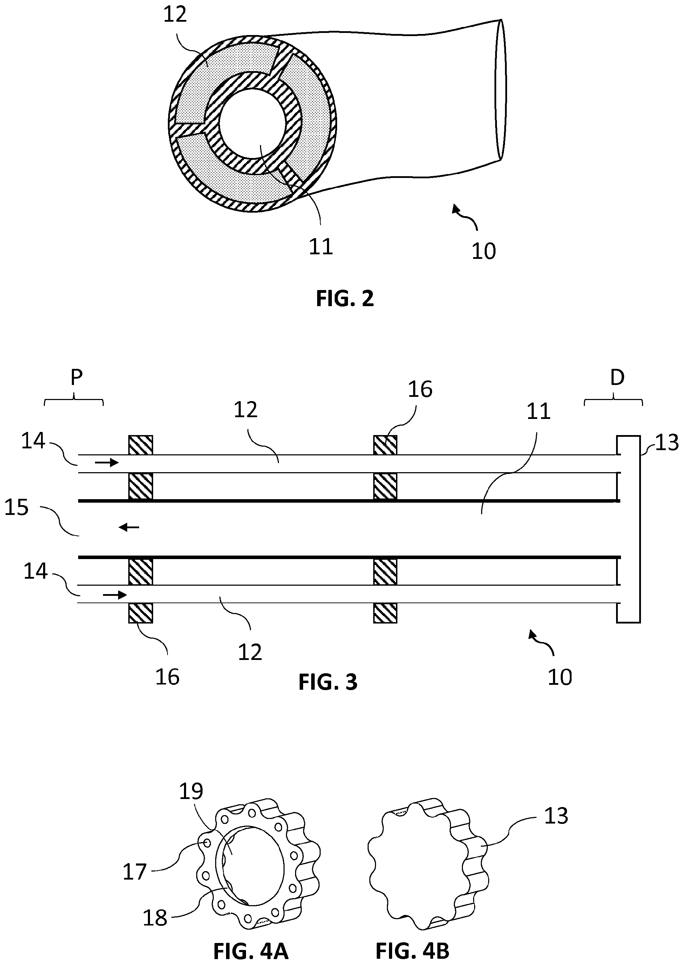

Ainsi, l'entrée 31 de l'échangeur thermique 1 permet une répartition du fluide caloporteur au sein des sondes thermiques flexibles 10. Comme cela est représenté à la figure 2, le fluide caloporteur chaud est par exemple conduit dans des canaux périphériques 12 puis revient refroidit via un canal central 11. Le fluide caloporteur refroidit sort ensuite par la sortie principale 32 de l'échangeur thermique 1 tel que représenté sur la figure 1.

Comme cela est illustré dans la Figure 3, les sondes thermiques flexibles 10 sont de forme longitudinale.

Les sondes thermiques flexibles 10 selon l'invention comportent un canal central 11 permettant une circulation d'un fluide caloporteur dans une première direction. Ce canal peut présenter une section transversale de passage de forme ellipsoïde ou polygonale comme par exemple circulaire, rectangulaire, carrée ou trapézoïde.

En outre, ce canal central 11 présente une largeur de taille centimétrique ou inférieure. C'est-à-dire que la plus petite dimension de la section transversale de passage du canal central 11 présente une taille centimétrique ou inférieure. Par exemple, lorsque le canal central présente une section de forme circulaire alors le diamètre est inférieur à 10 centimètres. De façon préférée, le canal central 11 a une largeur de taille millimétrique ou inférieure. Par exemple, le canal central 11 peut présenter une largeur d'un millimètre ou moins. Ainsi, le canal central 11 peut aussi présenter une largeur de taille inférieure au millimètre qui peut être de l'ordre d'une ou plusieurs centaines de micromètres.

Dans certains cas, il est souhaitable que les échanges thermiques entre le fluide caloporteur circulant dans le canal central 11 et le fluide extérieur soient limités. Pour cela, une paroi épaisse est préférable. Ainsi, l'épaisseur de la paroi formant le canal central est par exemple supérieure ou égale à deux cents micromètres, de façon préférée supérieure ou égale à un millimètre et de façon plus préférée supérieure ou égale à deux millimètres. Néanmoins cette paroi doit de préférence rester fine de façon à conserver la flexibilité des sondes thermiques 10. Ainsi, l'épaisseur de la paroi formant le canal central est par exemple inférieure ou égale à cinq millimètres, de façon préférée inférieure ou égale à quatre millimètres, de façon plus préférée inférieure ou égale à trois millimètres.

Les sondes thermiques flexibles 10 selon l'invention comportent également un ou plusieurs canaux périphériques 12 ayant une section transversale de passage identique. En outre, ces canaux périphériques 12 peuvent permettre une circulation du fluide caloporteur dans une seconde direction opposée à la première direction du fluide caloporteur dans le canal central 11.

Le ou les canaux périphériques 12 peuvent avoir une largeur de taille centimétrique ou inférieure.

De façon préférée, le ou les canaux périphériques 12 ont une largeur de taille millimétrique ou inférieure. Par exemple, le ou les canaux périphériques 12 peut(vent) présenter une largeur d'un millimètre ou moins.

Dans une autre réalisation, le ou les canaux périphériques 12 présentent une largeur de taille inférieure au millimètre qui peut être une taille micrométrique de l'ordre d'une ou plusieurs centaines de micromètres.

De préférence, dans chaque sonde thermique 10, les canaux périphériques 12 et le canal central présentent une longueur identique et sont fixés à une extrémité à un manchon de connexion 20 et à une autre extrémité à un embout de raccordement 13 (permettant la distribution dans un premier sens de l'écoulement ou la collection dans un sens opposé au premier sens). L'extrémité des sondes thermiques qui présente chacune un embout de raccordement, est libre et entrainée librement par la circulation de fluide exterieur.

Ce ou ces canaux périphériques 12 peuvent également présenter une section transversale de passage de forme ellipsoïde ou polygonale comme par exemple circulaire, rectangulaire, carrée ou trapézoïde. Ou toute forme, éventuellement complexe, apte à optimiser la surface de transfert thermique sous contrainte des performances mécaniques requises (solidité, sécurité, ...). Le choix de la forme, de la surface et de la longueur peut aussi être contraint par les débits et perte de charges spécifiées et tolérées pour l'écoulement du fluide extérieur.

De préférence, ce ou ces canaux périphériques 12 présente(nt) une section transversale de passage de forme circulaire.

Avantageusement, une sonde thermique flexible comporte au moins deux canaux périphériques 12, de préférence au moins quatre canaux périphériques 12 et de façon plus préférée au moins six canaux périphériques 12. Par exemple, une sonde thermique flexible 10 comporte entre deux et vingt canaux périphériques 12, de préférence entre quatre et douze canaux périphériques 12.

Le ou les canaux périphériques 12 sont formés chacun au moins en partie par une paroi d'échange thermique entre le fluide extérieur et le fluide caloporteur. Comme présenté à la figure 3, dans ce cas, les canaux périphériques 12 visibles sont formés intégralement par une paroi d'échange thermique entre le fluide extérieur et le fluide caloporteur.

Le ou les canaux périphériques 12 sont de préférence maintenus par un ou plusieurs guides 16 tel que présenté en figure 3. Le guide 16 comporte par exemple une ouverture pour le canal central 11 et une ou plusieurs ouvertures pour le ou les canaux périphériques 12.

De façon à faciliter l'échange thermique, une paroi de faible épaisseur est préférable. Ainsi, de façon préférée, l'épaisseur de la paroi d'échange thermique est inférieure à cinq millimètres, de façon plus préférée inférieure à deux millimètres et de façon encore plus préférée inférieure à un millimètre.

De façon préférée, les sondes thermiques flexibles 10 comportent des canaux périphériques 12 ayant une section transversale de passage du fluide caloporteur inférieure à celle du canal central 11, de façon plus préférée chaque canaux périphériques 12 ayant une section transversale de passage du fluide caloporteur inférieure à celle du canal central 11.

Les sections transversales de passage des canaux périphériques et du canal central peuvent être différentes et elles n'influent pas sur le débit. Le débit aller-retour sera toujours constant. Par contre, il est à souligner que les sections transversales de passages des canaux périphériques 12 sont identiques.

En outre, de façon à augmenter l'efficacité de l'échange thermique, il est souhaitable de concevoir des échangeurs thermiques présentant un rapport élevé entre la surface extérieure totale d'échange thermique et le volume de fluide caloporteur. Ainsi, de façon préférée, le rapport entre la surface extérieure totale d'échange thermique de la sonde thermique flexible et le volume de fluide caloporteur situé dans le ou les canaux périphériques 12 de la sonde thermique flexible 10 est supérieur ou égal à 100 m²/m³, de préférence supérieur ou égal à 500 m²/m³, de façon plus préférée supérieur ou égal à 1000 m²/m³, et de façon encore plus préférée supérieur ou égal à 2500 m²/m³. Dans ce contexte, la surface extérieure totale d'échange thermique peut correspondre à la surface extérieure totale de la paroi d'échange thermique.

Un tel rapport peut être atteint en adaptant la forme de la sonde thermique flexible comme par exemple la largeur (e.g. diamètre) du ou des canaux périphériques 12 ainsi que la surface de la paroi d'échange thermique. De façon préférée, la surface extérieure d'échange thermique par mètre linéaire (ml) d'une sonde thermique est comprise entre 0,01 m²/ml et 0,1 m²/ml.

En particulier, le rapport entre la surface extérieure totale d'échange thermique de la sonde thermique flexible 10 et le volume de fluide caloporteur situé dans le ou les canaux périphériques de la sonde thermique est compris entre :
- 100 et 500 m²/m³ pour des largeurs centimétriques ou inférieures du ou des canaux périphériques ;
- 500 et 5000 m²/m³ pour des largeurs millimétriques du ou des canaux périphériques ;
- 5000 et 20000 m²/m³ pour des largeurs du dixième de millimètre du ou des canaux périphériques.

Comme cela est présenté à la figure 3, une sonde thermique flexible 10 comporte des entrées 14 et sorties 15 du fluide caloporteur. Les entrées 14 et sorties 15 du fluide caloporteur sont positionnées avantageusement à une extrémité proximale P de la sonde thermique flexible 10.

De préférence, les sondes thermiques flexibles 10 sont connectées de manière amovible au sein de l'échangeur thermique 1. Cette connexion amovible se fait au niveau de l'extrémité proximale P de la sonde thermique flexible 10 c'est-à-dire au niveau des entrée 14 et sortie 15 du fluide caloporteur. Les sondes thermiques flexibles 10 peuvent par exemple être connectées par : un collier de fixation, des ventouses de fixation par vissage, des ventouses à soufflets, des raccords en polymère tel que des raccords cylindriques rapides ou des raccords de jonction.

Chaque sonde thermique flexible 10 comporte l'embout de raccordement 13, situé à une extrémité distale D de la sonde thermique flexible 10 et permettant de raccorder fluidiquement le canal central 11 et le(s) canal périphérique(s) 12. L'embout de raccordement 13 permet d'inverser la circulation de fluide caloporteur dans la sonde thermique flexible 10. C'est-à-dire qu'il permet au fluide caloporteur de passer d'un sens de circulation dans une première direction à un sens de circulation dans une seconde direction de préférence opposée à la première direction. En effet, une fois que le fluide caloporteur arrive à l'extrémité d'un canal périphérique 12, il tourne dans le sens de l'écoulement et pénètre dans le canal central 11. De cette façon, l'entrée et la sortie du fluide caloporteur se produisent à la même extrémité de la sonde thermique flexible 10. Cela facilite considérablement la mise en oeuvre des projets de récupération de chaleur.

Plus particulièrement, l'embout de raccordement 13 permet au fluide caloporteur de circuler dans la sonde thermique flexible 10, dans un premier sens, puis dans un second sens. L'échangeur thermique peut être agencé de façon à faire circuler le fluide caloporteur dans le ou les canaux périphérique(s) 12 de l'extrémité proximale P à l'extrémité distale D de la sonde thermique flexible 10. L'extrémité proximale P est l'extrémité la plus proche de moyens d'entrainement alors que l'extrémité distale D, opposée à l'extrémité proximale P, est l'extrémité de la sonde portant l'embout de raccordement 13. Alternativement, l'échangeur thermique peut être agencé de façon à faire circuler le fluide caloporteur dans le ou les canaux périphérique(s) 12 de l'extrémité distale D à l'extrémité proximale P de la sonde thermique flexible 10. L'embout de raccordement permet d'assurer une connexion hydraulique étanche des circuits de conduite du fluide caloporteur. Comme cela a déjà été évoqué, la sonde thermique flexible 10 est agencée de façon à ce que le sens de circulation du fluide caloporteur soit opposé dans le canal central 11 au sens de circulation du fluide caloporteur dans le ou les canaux périphériques 12.

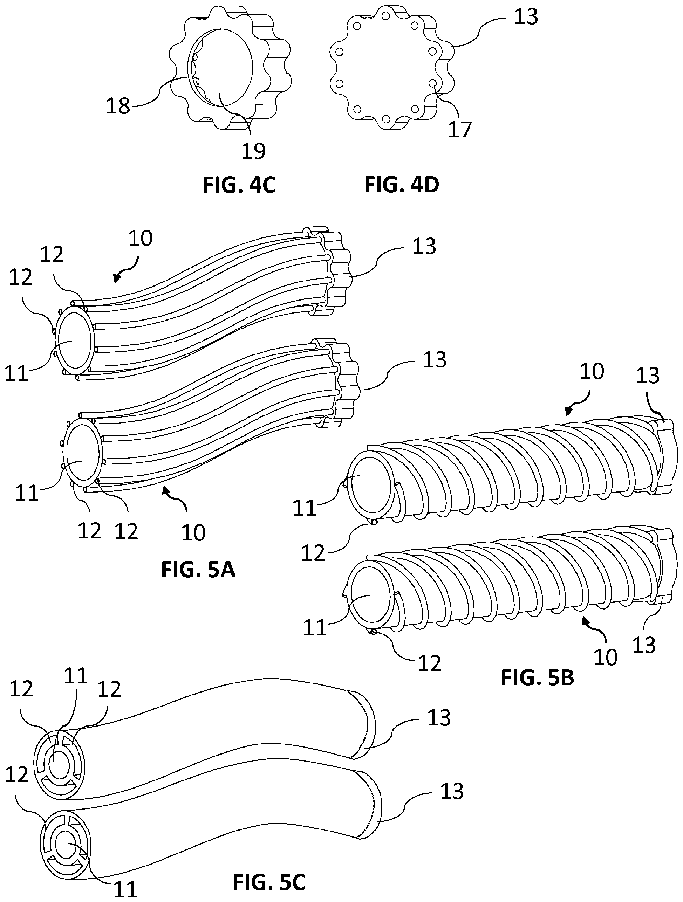

Les figures 4A à 4D présentent une vue avant et une vue arrière de deux embouts de raccordement 13. L'embout de raccordement 13 comporte une ou plusieurs ouvertures secondaires 17, une ouverture principale 18 et une cavité 19. Plus particulièrement, la ou les ouvertures secondaires 17 correspondent au canal périphérique 12 ou aux canaux périphériques 12, l'ouverture principale 18 correspond au canal central 11 et la cavité 19 permet au fluide caloporteur de passer du canal central au canal périphérique ou inversement. Par exemple, dans le cas de l'embout de raccordement selon les figures 4A et 4B, la cavité 19 permet au fluide caloporteur de changer de direction tandis que dans le cas de l'embout rigide selon les figures 4C et 4D, la cavité 19 permet au fluide caloporteur de passer du canal central 11 aux canaux périphériques 12. L'embout de raccordement 13 peut être par exemple en matériau rigide ou souple. Ainsi, l'embout de raccordement peut par exemple être réalisé en polymères, thermodurcissables ou thermoplastiques.

L'embout de raccordement 13 peut être intégré au canal central 11 et aux canaux périphérique(s) 12 comme cela est présenté à la figure 3. Alternativement, l'embout de raccordement 13 peut être une pièce indépendante qui pourra être fixée au canal central 11 et au(x) canau(x) périphérique(s) 12. L'embout de raccordement 13 peut alors être fixé de façon amovible ou inamovible. Une fixation amovible peut par exemple être sélectionnée parmi une fixation impliquant : une ou plusieurs encoches, un pas de vis, un ou plusieurs ergots, et/ou un ou plusieurs clips. Une fixation inamovible peut par exemple être une soudure ou un collage permanent.

Dans la suite de la description de l'invention, l'échangeur thermique 1 selon l'invention est décrit comme étant configuré pour faire circuler le fluide caloporteur depuis l'extrémité proximale P d'une sonde thermique flexible 10 à son extrémité distale D au travers du ou des canaux périphériques 12 puis de le faire circuler depuis l'extrémité distale D d'une sonde thermique flexible 10 à son extrémité proximale P au travers du canal central 11. Néanmoins, l'échangeur thermique 1 selon l'invention pourrait également être configuré pour faire l'inverse.

Comme cela est illustré dans les Figures 5A à 5C, les sondes thermiques flexibles 10 peuvent prendre de nombreuses formes. Elles sont néanmoins systématiquement de formes longitudinales, et flexibles. Comme cela est présenté dans les figures 5A à 5C où elles sont présentées par deux, l'échangeur thermique selon l'invention comporte plusieurs sondes thermiques, de préférence identiques.

Avantageusement, une sonde thermique flexible 10 présente au moins deux canaux parallèles, avec de préférence un ou plusieurs canaux périphérique(s) 12 parallèles à un canal central 11. C'est par exemple le cas de la sonde thermique flexible 10 présentée à la figure 5A qui présente dix tubes extérieurs formant les canaux périphériques 12 et étant parallèles à un tube intérieur formant le canal central 11. En outre, alors que les tubes extérieurs formant les canaux périphériques 12 présentés dans la figure 3 sont indépendants (ou séparés entre eux) du tube intérieur formant le canal central 11, la sonde thermique flexible 10 présentée à la figure 5A comporte des tubes extérieurs fixés au tube intérieur. De façon préférée, la sonde thermique flexible 10 présente plusieurs tubes extérieurs disposés autour d'un tube intérieur, et de façon plus préférée, ces tubes extérieurs, formant les canaux périphériques 12, sont disposés en couronne autour du tube intérieur formant le canal central 11.

Avantageusement, une sonde thermique flexible 10 peut comporter deux canaux co-axiaux avec de préférence un canal périphérique 12 co-axial au canal central 11. De façon préférée, le canal central 11 et les canaux périphériques 12 peuvent partager des parois. C'est par exemple le cas de la sonde thermique flexibles 10 présentée à la figure 5C où les canaux périphériques sont formés en partie par une paroi d'échange thermique et en partie par une paroi formant le canal central 11. Ainsi, la sonde thermique flexible 10 pourrait également être formée par un tube intérieur formant le canal central 11 et positionné à l'intérieur d'un tube extérieur. Le canal périphérique 12 serait alors situé entre les parois internes du tube extérieur et les parois externes du tube intérieur. En particulier dans ce cas, il peut n'y avoir qu'un seul canal périphérique. La sonde thermique 10 a des supports (continus ou alternatifs), tels que des entretoises, entre le tube intérieur et celui d'extérieur, comme cela peut se voir dans la figure 5C.

Alternativement, la sonde thermique flexible 10 peut ne pas présenter de canaux ayant des axes parallèles. C'est par exemple le cas de la sonde thermique flexible 10 présentée à la figure 5B. La sonde thermique flexible 10 selon la figure 5B comporte quatre canaux périphériques formés par des tubes extérieurs positionnés en spirale autour du tube intérieur formant le canal central 11. La longueur des tubes extérieurs étant plus grande que la longueur du tube intérieur, le temps de passage du fluide caloporteur dans le canal périphérique sera plus long. Ainsi, le ou les canaux périphériques 12 peuvent avantageusement être positionnés sous la forme d'une spirale autour du canal central 11.

De façon préférée, la longueur des sondes thermiques flexibles 10 est comprise entre quelques centimètres et quelques mètres. Par exemple, si les diamètres de ses canaux sont faibles, par exemple inférieurs à un centimètre, la sonde thermique 10 pourra ne mesurer que quelques centimètres mais conservera une surface de transfert satisfaisante. A l'inverse, si les diamètres de ses canaux sont élevés, la sonde thermique 10 pourra mesurer jusqu'à quelques mètres de façon à présenter une surface de transfert satisfaisante.

De façon préférée, une sonde thermique flexible 10 selon l'invention présente une longueur supérieure ou égale à cinq centimètres, de façon plus préférée supérieure ou égale à vingt centimètres et de façon encore plus préférée supérieure ou égale à cinquante centimètres.

Par exemple, une sonde thermique flexible 10 selon l'invention peut présenter une longueur comprise entre cinq et deux-cents centimètres, de façon préférée comprise entre dix et cent-cinquante centimètres, de façon plus préférée comprise entre quinze et cent centimètres, et de façon encore plus préférée comprise entre vingt et cinquante centimètres. Dans une autre réalisation non limitative, elles peuvent être inférieures à cinq mètres.
En outre, les sondes thermiques flexibles 10 sont en matériau polymère, de préférence souple. C'est-à-dire qu'elles sont déformables et/ou se déplacent sous l'effet de l'écoulement du fluide extérieur et/ou de moyens extérieurs de déplacement et fixés ou en contact avec les sondes. Elles peuvent reprendre ensuite leur forme initiale après déformation /déplacement inverse, en particulier en l'absence d'écoulement dans le cas où le matériau polymère est élastique. Le mot déformable est dans ce cas l'équivalent du mot souple.

Dans une première réalisation, chaque sonde thermique flexible, est en matériau polymère déformable (ou souple) apte à se déformer/osciller en serpentin (déformations et déplacements). Dans une seconde réalisation, chaque sonde thermique flexible 10, est en matériau polymère déformable (ou souple) apte à osciller ou effectuer un mouvement de va-et-vient (mouvement légèrement pendulaire, l'une des extrémités étant fixée l'autre étant libre) ou de vibrations (mouvement plutôt de translation de l'ensemble des sondes). Ces mouvements peuvent être entrainés par des forces d'écoulement du fluide extérieur, ou d'autres forces extérieure (mécanique, acoustique, optique ou électromagnétique) appliquées à la sonde. Dans le cas d'une force extérieure, celle-là peut être appliquée à l'extrémité libre de la sonde ou sur la longueur.

A la différence des mouvements de vibrations mécaniques dû aux machines tournantes, le mouvement/déformation de l'échangeur est de basses fréquences, de l'ordre de 100 Hz ou inférieur à 100 Hz, de préférence de quelques Hz comme par exemple inférieur à 10 Hz, voire en dessous d'un Hz.

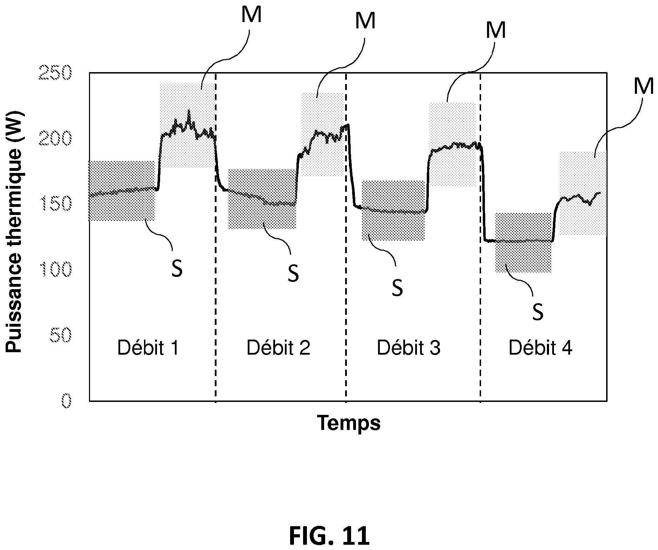

La figure 11 présente en particulier une puissance thermique générée par un échangeur thermique selon l'invention en fonction d'un statut des sondes pour avant être statiques S (en gris foncé) ou en mouvement M (en gris clair). La figure 11 montre bien que, dans le temps et en présence de plusieurs débits différents, le mouvement des sondes thermiques flexibles permet un gain sur la puissance échangée d'environ 30%.

Les sondes thermiques flexibles 10 selon l'invention comportent un polymère seul ou en combinaison avec une charge ou un renfort pour former un matériau polymère composite. En effet, dans le cadre d'un matériau polymère composite, le polymère peut être associé à une charge ou un renfort présentant un bon coefficient de conduction thermique de façon à former un matériau polymère composite présentant à la fois des propriétés de flexibilité et des propriétés d'échange thermique améliorées.

Comme cela a été évoqué, les matériaux polymères peuvent présenter un coefficient d'échange thermique relativement faible pour optimiser les coûts de fabrication. Ainsi, le matériau de la sonde thermique flexible peut avoir une conductivité thermique inférieure ou égale à 1 W/m.K, cette faible conductivité thermique étant compensée par le nombre de canaux périphériques, leur souplesse, et leur petite taille de section transversale de passage permettant un échange thermique satisfaisant de l'échangeur composé de plusieurs sondes.

Néanmoins, dans certaines applications où la performance est recherchée à la place du coût, on peut utiliser d'autres polymères composites possédant une conductivité thermique élevée pour les sondes thermiques. De plus ; la charge ou le renfort peut avantageusement être sélectionné parmi : du graphite, du noir de carbone, du graphène, des fibres de carbone, des nanotubes de carbone, des particules de cuivre, d'aluminium, d'argent ou de zinc.

De façon préférée, le polymère de la sonde thermique peut correspondre à un élastomère.

En particulier, un polymère peut correspondre à un polymère thermoplastique ou thermodurcissable ou à un de leur mélange. Par exemple, le polymère peut être sélectionné parmi : du silicone (e.g. polydiméthylsiloxane), du caoutchouc (e.g. polyisoprène), du polyuréthane, une polyoléfine (e.g. basse densité) ou du polystyrène.

Un polymère thermoplastique est un polymère qui, de manière répétée, peut être ramolli ou fondu sous l'action de la chaleur et qui adopte de nouvelle forme par application de chaleur et de pression. Des exemples de polymères thermoplastiques sont, par exemple : le polyéthylène haute densité (PEHD), le polyéthylène basse densité (PEBD), le polyéthylène téréphtalate (PET), le polychlorure de vinyle (PVC), le polyméthacrylate de méthyle (PMMA) ou copolymère à bloc polyuréthane polyurée.

Un polymère thermodurcissable correspond à une matière plastique qui se transforme de manière irréversible par polymérisation en un réseau polymère insoluble. Les polymères thermodurcissables ou thermodurcis sont des polymères ayant une structure tridimensionnelle réticulée. Les polymères thermodurcis sont mis en forme à chaud et se réticulent selon la forme voulue. Une fois la forme du polymère thermodurcissable fixée et refroidie, elle ne peut plus être modifiée sous l'action de la chaleur. Des polymères thermodurcissables sont par exemple : les polyesters insaturés, les polyimides, les polyuréthanes ou les esters vinyliques qui peuvent être époxydique ou phénolique.

L'extrémité proximale P (i.e. amont) de la sonde thermique flexible 10 est généralement fixe. Mais, la nature du matériau polymère de la sonde thermique flexible 10 et la longueur de la sonde thermique flexible 10 sont sélectionnées pour permettre à la sonde thermique flexible d'avoir un mouvement qui tend à suivre les mouvements et la direction de l'écoulement d'un fluide extérieur. De façon plus particulière, le polymère peut être un polymère sélectionné de façon à permettre à la sonde thermique, lorsqu'elle est placée dans le fluide extérieur, un déplacement latéral dont la valeur maximale sur la longueur de l'échangeur est égal à au moins deux fois le diamètre externe de la sonde thermique, c'est-à-dire que la sonde thermique oscille autour d'une position médiane avec une amplitude latérale maximale (ou radiale par rapport à l'axe longitudinal de la sonde thermique) de deux fois le diamètre externe de la sonde thermique. L'ensemble de la sonde ne se translate pas en général de la même manière, car il y a des parties qui bougent davantage que d'autres. Ainsi, le polymère est avantageusement un polymère conférant aux sondes thermiques une certaine flexibilité.

Ainsi, de façon préférée, mais de façon non limitative, les sondes thermiques 10 comportent un polymère présentant un module de Young (transversal et longitudinal) inférieur ou égal à 3 GPa, de façon plus préférée inférieur ou égal à 1,5 GPa, et de façon encore plus préférée inférieur ou égal à 0,8 GPa.

Mais des ordres de grandeur supérieurs peuvent être considérés pour le module de Young.

De façon préférée, les sondes thermiques 10 comportent un polymère présentant un module de cisaillement inférieur ou égal à 200 MPa, de façon plus préférée inférieur ou égal à 3 MPa, et de façon encore plus préférée inférieur ou égal à 0,8 MPa.

Les caractéristiques de rigidité et flexibilité de la sonde, composée des matériaux polymères dont les modules de Young cités plus haut, sont de préférence mesurées selon la norme ISO 10619-1:2017.

En outre, la nature du matériau de la sonde thermique flexible et la longueur de la sonde thermique flexible 10 sont avantageusement choisis pour permettre à la sonde thermique flexible 10 d'avoir en fonctionnement une perte de charges égale ou inférieure à 2 bars ou inférieure à la force requise pour mettre le fluide en mouvement par le moyen de pompage choisi.

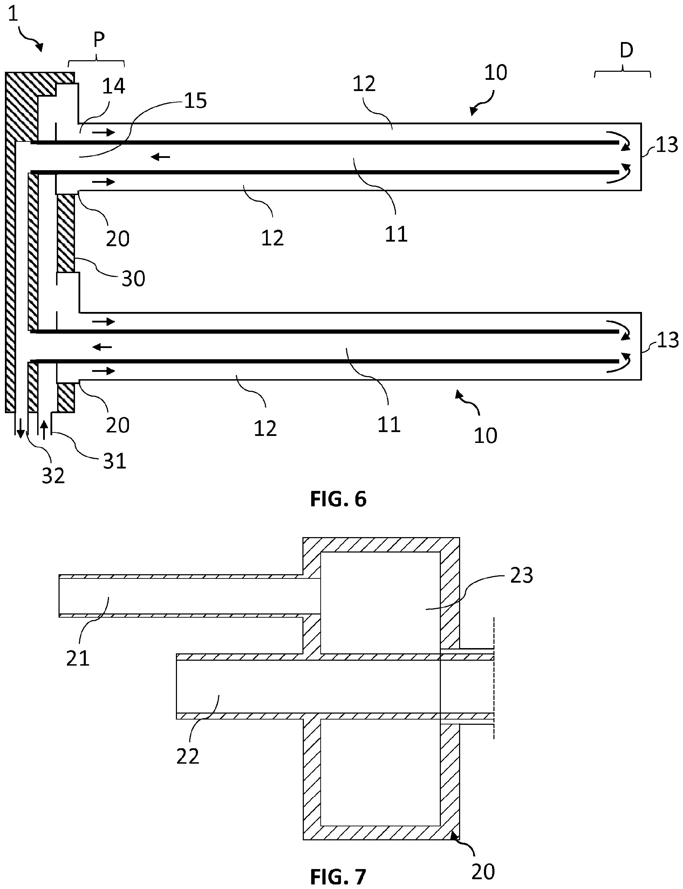

Comme cela est présenté à la figure 6, l'échangeur thermique selon l'invention est apte à diviser de débit Q de fluide caloporteur qu'il réceptionne en p sondes thermiques flexibles et n canaux périphériques que comportent chacune des p sondes thermiques flexibles. Ainsi, le débit dans chaque canal périphérique de chaque sonde est égal à q=Q/(p*n). L'échangeur thermique selon l'invention permet donc avantageusement d'augmenter la surface d'échange mais également de diviser le débit du fluide caloporteur de façon à conjointement augmenter l'efficacité de l'échange thermique qui est proportionnelle au ratio surface d'échange de chaque canal périphérique/débit de chaque canal périphérique.

En d'autres termes, quand n est supérieur à 1, l'échangeur thermique divise à deux niveaux différents le débit principal Q, d'une part avec les p sondes et ensuite pour chaque de sonde thermique p, avec les n canaux périphériques.

En outre, chaque sonde thermique flexible 10 peut être avantageusement associée à un manchon de connexion 20.

Chaque sonde thermique flexible 10 peut ainsi être connectée par son extrémité proximale à un manchon de connexion 20. Cette connexion peut prendre différentes formes. Néanmoins, cela est de préférence une connexion amovible. Ainsi, il est plus aisé d'entretenir l'échangeur thermique 1 ou de le faire évoluer en fonctions des besoins ou des conditions d'exploitation. De façon préférée, la sonde thermique flexible 10 est fixée au manchon de connexion 20 par l'intermédiaire d'une connexion amovible sélectionnée parmi : un collier de fixation, des ventouses de fixation par vissage, des ventouses à soufflets, des raccords en polymère tel que des raccords cylindriques rapides ou des raccords de jonction.

Alternativement, la sonde thermique flexible 10 est fixée au manchon de connexion 20 par l'intermédiaire d'une connexion inamovible sélectionnée parmi : un soudage ou un collage.

Comme cela est détaillé à la figure 7, le manchon de connexion 20 est apte à connecter fluidiquement la pluralité de canaux périphériques 12 à un seul premier tube 21 logé dans le manchon et le canal central 11 à un seul second tube 22 logé dans le manchon de connexion 20. La connexion de la pluralité de canaux périphérique peut par exemple se faire par l'intermédiaire d'une cavité 23 sur laquelle débouche le premier tube 21, d'une part et les entrées 14 des canaux périphériques 12, d'autre part. Ainsi, la répartition du fluide caloporteur entre la pluralité de canaux périphériques 12 est réalisée dans cette cavité 23.

Le manchon de connexion 20 peut être couplé à un système de distribution/collection 30, comme cela est présenté dans la figure 6. Ainsi, de façon préférée, l'échangeur thermique 1 comporte un système de distribution/collection 30 du fluide caloporteur, connecté fluidiquement aux sondes thermiques flexibles, de préférence par l'intermédiaire d'un manchon de connexion 20, pour faire circuler en parallèle le fluide caloporteur dans les sondes thermiques flexibles 10 depuis une entrée principale 31 du système de distribution/collection 30 à une sortie 15 de chaque sonde thermique flexible 10.

Avantageusement, le système de distribution/collection 30 permet à partir d'une seule entrée principale 31 de connecter l'ensemble des canaux périphériques 12 des sondes thermiques flexibles 10 de l'échangeur thermique 1, et à partir d'une seule sortie 32 de collecter l'ensemble des retours provenant du canal central 11 des sondes thermiques flexibles 10 de l'échangeur thermique 1.

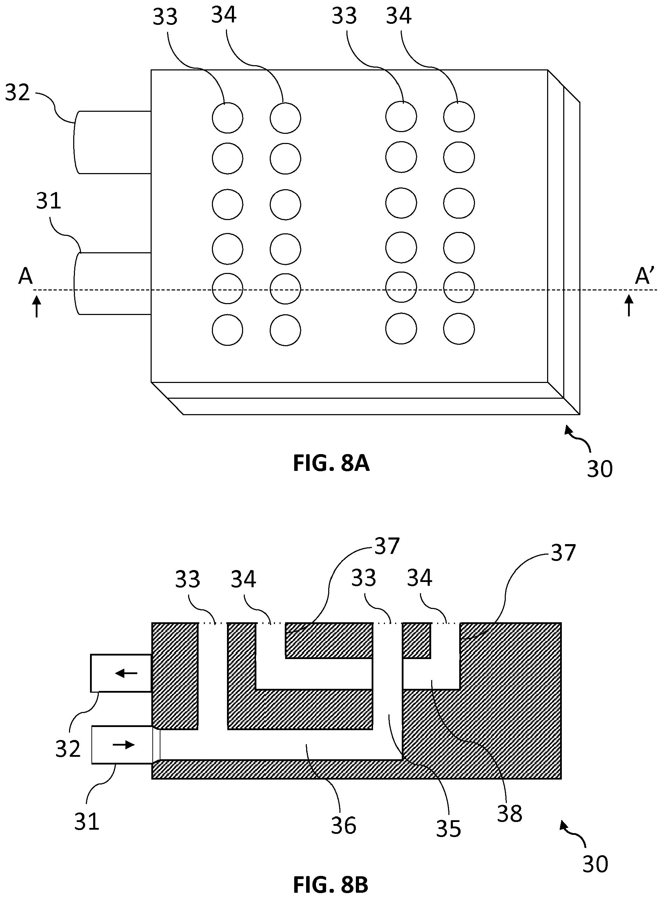

Un système de distribution/collection 30 est présenté en particulier dans la figure 8A en vue de dessus de profil. Comme cela est présenté en figure 8A, le système de distribution/collection 30 comporte une entrée principale 31 et une sortie principale 32. Il peut en outre comporter une pluralité de sorties secondaires 33 et une pluralité d'entrées secondaires 34.

Les sorties secondaires 33 sont plus particulièrement agencées pour être connectées aux canaux périphériques 12 d'une sonde thermique flexible 10 par exemple par l'intermédiaire du premier tube 21 d'un manchon de connexion 20. Les entrées secondaires 34 sont quant à elles plus particulièrement agencées pour être connectées au canal central 11 d'une sonde thermique flexible 10 par exemple par l'intermédiaire du second tube 22 d'un manchon de connexion 20.

Le système de distribution/collection 30 selon la figure 8A est présenté via une vue en coupe selon l'axe A-A' dans la figure 8B. Cette figure montre que selon un mode de réalisation, les sorties secondaires 33 sont reliées via des canaux 35, de préférence verticaux, à une cavité 36, de préférence horizontale, elle-même reliée à l'entrée principale 31. Ainsi, l'entrée principale est connectée via la cavité 36 à l'ensemble des sorties secondaires 33 ce qui permet lors de l'utilisation de l'échangeur thermique de pouvoir distribuer simplement le fluide caloporteur à l'ensemble des sondes thermiques flexibles 10.

De même, même si la coupe ne permet pas de le visualiser, selon un mode de réalisation, les entrées secondaires 34 sont reliées, via des canaux 37 de préférence verticaux, à une cavité 38, de préférence horizontale, elle-même reliée à la sortie principale 32. Ainsi, la sortie principale 32 est connectée via la cavité 38 à l'ensemble des entrées secondaires 34 ce qui permet lors de l'utilisation de l'échangeur thermique de pouvoir collecter simplement le fluide caloporteur depuis l'ensemble des sondes thermiques flexibles 10.

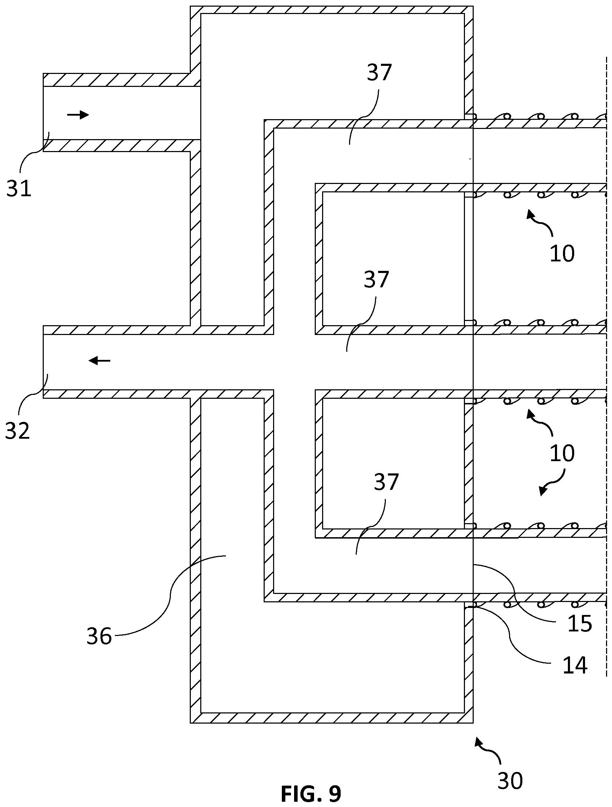

La figure 9 présente un mode de réalisation de l'invention selon lequel le manchon de distribution 20 est intégré dans le système de distribution/collection 30. Dans ce mode de réalisation, l'entrée principale 31 débouche sur une cavité 36 connectée aux entrées 14 du ou des canaux périphériques 12 et la sortie principale 32 est connectée par l'intermédiaire de canaux 37 à chaque canal central 11 de l'ensemble des sondes thermiques de l'échangeur thermique. Un tel mode de réalisation, permettant de disposer d'une seule pièce intégrant un système de distribution/collection 30 et les manchons de connexion 20 permet de faciliter le montage de l'échangeur thermique 1.

De telles caractéristiques permettent de produire un échangeur thermique 1 aux performances élevées.

Ainsi, de façon préférée, les coefficients de transfert thermique de l'échangeur selon l'invention sont compris entre 100 et 5000 W/m².K.

En outre, ces performances peuvent être particulièrement avantageuses selon des propriétés du fluide caloporteur utilisé. Par exemple, le fluide caloporteur peut être sélectionné parmi : une solution aqueuse comme de l'eau pouvant comprendre un antigel, une solution comportant des composés aromatiques ou une solution comportant des composés siliconés.

Bien qu'il n'ait jamais été considéré dans son intégralité, le potentiel d'énergie thermique dans le cycle de l'eau est important. Néanmoins les échangeurs thermiques n'étaient pas adaptés au transfert thermique pour des applications civiles. Cela notamment à cause de la complexité de certains milieux fluidiques de récupération qui présentent un défi pour l'encrassement des échangeurs conventionnels.

De façon préférée, l'échangeur thermique 1 selon l'invention est particulièrement adapté à la récupération de chaleur et de froid pour un approvisionnement énergétique efficace dans les bâtiments. Une telle utilisation pourrait représenter plus de 40 % de la consommation d'énergie primaire des pays européens. Grâce à l'échangeur thermique 1 selon l'invention, de telles applications deviennent économiquement intéressantes. Par exemple, il pourrait être utilisé pour fournir des abris de refroidissement à partir de l'eau de réseau face à l'augmentation des vagues de chaleur.

Ainsi, de façon préférée, l'échangeur thermique 1 selon l'invention peut facilement être inséré dans les réseaux d'eau potable / eaux usées existants. La flexibilité de l'échangeur thermique 1 selon l'invention facilite non seulement l'installation, mais fournit également une densité de récupération d'énergie plus élevée avec des valeurs pouvant dépasser 300 W par mètre linéaire et de préférence 500 W par mètre linéaire d'une sonde thermique flexible 10.

La figure 10 représente l'intégration d'un échangeur thermique 1 selon l'invention au sein d'un réseau d'eau potable 4. Ainsi, l'échangeur thermique est positionné entre une entrée 41 et une sortie 42 d'eau potable. Il est alimenté par un fluide caloporteur chaud pouvant par exemple provenir d'un système de climatisation. Le fluide caloporteur chaud est entrainé dans les sondes thermiques flexibles 10, dont deux configurations sont présentées, et plus particulièrement dans les canaux périphériques 12 au sein desquels la chaleur du fluide caloporteur est cédée vers l'eau potable froide. Le canal central 11 de chaque sonde thermique flexible 10 permet le retour d'un fluide caloporteur refroidit qui peut alors sortir de l'échangeur thermique 1 par la sortie principale 32. La figure 10 présente deux configurations possibles des sondes thermiques flexibles 10 à savoir une configuration des canaux co-axiaux par sonde thermique flexible 10 et une configuration comportant vingt canaux périphériques par sonde thermique flexible 10.

Ainsi, selon un autre aspect, l'invention porte sur l'utilisation de l'échangeur thermique 1 selon l'invention dans un réseau d'eau potable ou d'eaux usées. En effet, du fait de ses avantages, il pourrait être facilement intégré dans une canalisation existante.

En particulier, l'échangeur thermique 1 selon l'invention peut être utilisé pour récupérer de la chaleur des réseaux d'eaux usées.

Alternativement, l'échangeur thermique 1 selon l'invention peut être utilisé pour récupérer du froid du cycle urbain de l'eau potable ou d'irrigation.

Alternativement, l'échangeur thermique 1 selon l'invention peut être disposé dans un fleuve, un autre cours d'eau, la mer, ou un lac, pour récupérer l'énergie thermique de l'eau.

De façon plus classique, l'échangeur thermique 1 selon l'invention peut aussi être utilisé pour récupérer du froid ou du chaud de procédés industriels permettant de prérefroidir ou de pré-chauffer un fluide, ou dans des bâtiments tertiaires (l'échangeur 1 étant couplé à des systèmes de climatisation ou autres).

Une autre application peut être d'utiliser l'échangeur thermique dans le domaine de la chirurgie d'intervention, par exemple cryogénique pour viser les tumeurs cancéreuses. Dans ces cas là, l'échangeur thermique peut avoir des dimensions et des matériaux comparables à celles des cathéters.

Les échangeurs de chaleur peuvent être classifiés en fonction de leur disposition d'écoulement. Dans les échangeurs de chaleur à écoulement parallèle en co-courant, les deux fluides entrent dans l'échangeur à la même extrémité et se déplacent parallèlement l'un à l'autre de l'autre côté. Dans les échangeurs de chaleur à contre-courant, les fluides pénètrent dans l'échangeur à partir des extrémités opposées. La conception à contre-courant est la plus efficace, car elle permet de transférer le plus de chaleur du fluide thermique par unité de masse.

Ainsi, de façon préférée, lors de son utilisation, l'échangeur thermique est configuré de façon à ce que la direction d'écoulement du fluide caloporteur dans le ou les canaux périphériques soit opposée à la direction d'écoulement du fluide extérieur. Cela peut par exemple être obtenu en faisant circuler le fluide caloporteur depuis l'extrémité proximale P d'une sonde thermique flexible 10 à son extrémité distale D au travers du canal central puis de le faire circuler depuis l'extrémité distale D à l'extrémité proximale P au travers du ou des canaux périphériques 12.

Selon un autre aspect, l'invention porte sur un ensemble comprenant l'échangeur thermique selon l'invention et une canalisation.

La canalisation est de préférence une canalisation d'eau potable ou d'eaux usées dans laquelle est disposé l'échangeur thermique. Le fluide extérieur est alors de l'eau potable ou des eaux usées.

Une ouverture peut être réalisée dans la canalisation de façon à y introduire les sondes thermiques flexibles 10 de l'échangeur thermique selon l'invention. Cette ouverture est avantageusement de dimension réduite et peut par exemple correspondre à sensiblement la largeur du système de distribution/collection 30. En particulier, la surface de l'ouverture peut être inférieure au triple du produit du nombre de sondes thermiques flexibles par la section en coupe d'une sonde thermique.

Selon un autre aspect, l'invention porte sur un procédé de fabrication d'un échangeur thermique selon l'invention.

Avantageusement, le matériau polymère de la sonde thermique flexible 10 est un polymère qui présente une température de fusion inférieure à 300°C, de préférence inférieure à 200°C. Ainsi, il peut être utilisé dans des procédés de fabrication par extrusion. Dans ce contexte, le matériau polymère est de préférence un matériau polymère thermoplastique, tel qu'un polyméthacrylate de méthyl ou un polytéréphtalate d'éthylène.

Dans le cas de l'extrusion, la sonde thermique s'apparente à une gaine dite thermique (avec canal central et canaux périphériques) que le fabricant choisirait de couper à tel ou tel endroit de la gaine pour répondre à la demande de longueur différente de gaine de tel ou tel utilisateur.

Le procédé de fabrication d'un échangeur thermique selon l'invention comporte alors une étape de formation d'une ou de plusieurs sondes thermiques flexibles par extrusion. De façon classique, préalablement à l'extrusion, le matériau polymère est porté à l'état de fusion. Le matériau polymère est alors introduit dans une extrudeuse par exemple via une trémie. Dans l'extrudeuse, le mélange est chauffé et ramolli, grâce à une vis sans fin qui se trouve dans un fourreau (tube) chauffé pour rendre le matériau polymère malléable. On obtient alors une matrice polymérique à l'état fondu qui est entrainée vers la sortie grâce à la vis. La tête de sortie de l'extrudeuse, équipée d'une filière ou buse de filage, donne sa forme à la matrice polymérique laquelle est refroidie en sortie pour être transformée en sonde thermique flexible 10 longitudinale.

Une extrudeuse est un réacteur comportant une ou plusieurs vis sans fin actionnées chacune dans un fourreau, permettant notamment le brassage des éléments introduits dans ledit fourreau. L'utilisation d'une extrudeuse pour la mise en œuvre du procédé est avantageuse d'un point de vue environnemental, de sécurité et de sûreté du procédé. En effet, une extrudeuse permet de traiter des polymères fondus de forte viscosité sans avoir recours à l'ajout de solvant pour diminuer la viscosité des polymères fondus. L'extrudeuse peut être avantageusement remplacée par un système de convoyeur à vis dans toute ou partie de sa longueur.

Le procédé peut également comprendre une étape de fixation d'un embout de raccordement 13 sur chacune des sondes thermiques flexibles 10.

L'extrusion permet aussi la simplicité de fabrication, de sélectionner des longueurs variables pour les sondes thermiques flexibles.

Ainsi, la présente invention permet de proposer un échangeur thermique permettant une installation et une maintenance aisées, une forte modularité notamment au niveau du nombre et des dimensions des sondes thermiques flexibles 10, et un faible encombrement, cela tout en présentant une bonne efficacité de l'échange thermique.

Du fait de tous ces avantages, il est en outre possible de mettre en œuvre des processus de récupération de chaleur ou de refroidissement moins couteux que ceux utilisés jusqu'à présent.

## Revendications

1. Echangeur thermique (1) flexible destiné à être disposé dans un fluide extérieur en mouvement, comprenant :
- plusieurs sondes thermiques flexibles (10) montées fluidiquement en parallèle, destinées à être disposées dans l'écoulement du fluide extérieur, et à être couplées à des moyens d'entrainement pour permettre :
• la circulation d'un fluide caloporteur dans les sondes thermiques flexibles (10) et
• un échange de chaleur entre le fluide caloporteur et le fluide extérieur, le débit du fluide caloporteur étant réparti dans les sondes thermiques flexibles (10),
dans lequel chaque sonde thermique flexible (10), de forme longitudinale, étant en matériau polymère, et présentant :
∘ un canal central (11), ayant une largeur de section transversale de passage de taille centimétrique ou inférieure;
∘ un ou plusieurs canaux périphériques (12) au canal central (11), ayant chacun une même section transversale de passage du fluide caloporteur et formés chacun au moins en partie par une paroi d'échange thermique entre le fluide extérieur et le fluide caloporteur,
le ou les canaux périphériques (12) ayant une largeur de la section transversale de passage inférieure à la largeur de la section transversale de passage du canal central (11),
le débit du fluide caloporteur dans le canal central (11) se répartissant dans les canaux périphériques lorsque la sonde thermique flexible (10) présente plusieurs canaux périphériques (12) ;
et dans lequel l'échangeur thermique (1) comporte, pour chaque sonde thermique flexible (10) :
- un embout de raccordement (13), situé à une extrémité distale (D) de la sonde thermique flexible (10), et raccordant fluidiquement le canal central (11) et le ou les canaux périphériques (12), le sens de circulation du fluide caloporteur dans la sonde thermique flexible (10) étant inversé entre le canal central (11) et le ou les canaux périphériques (12);
et dans lequel chaque sonde thermique flexible (10), est en matériau polymère déformable, apte à se déformer et/ou se déplacer entre différentes positions, dans l'écoulement du fluide extérieur, pour augmenter les échanges d'énergie thermique entre le fluide caloporteur circulant dans la sonde thermique (10) et le fluide extérieur de l'écoulement.

2. Echangeur thermique (1) flexible selon la revendication 1, dans lequel chaque sonde thermique flexible (10) comporte plusieurs canaux périphériques (12) qui sont formés par des tubes flexibles séparés du tube intérieur flexible formant le canal central (11) et disposés autour du tube intérieur flexible formant le canal central (11), chaque canal périphérique (12) ayant une section transversale de passage du fluide caloporteur inférieure à celle du canal central (11).

3. Echangeur thermique (1) flexible selon l'une des revendications 1 ou 2, dans lequel chaque sonde thermique flexible (10), est en matériau polymère déformable apte à se déformer suivant des mouvements de basses fréquences inférieures à 100 Hz.

4. Echangeur thermique (1) flexible selon l'une des revendications 1 à 3, dans lequel chaque sonde thermique flexible (10), est en matériau polymère déformable apte à se déformer en serpentin dans l'écoulement.

5. Echangeur thermique (1) flexible selon l'une des revendications 1 à 3, dans lequel chaque sonde thermique flexible (10), est en matériau polymère déformable apte à se déformer :
- en mouvement va-et-vient ; et/ou
- en vibrations.

6. Echangeur thermique (1) flexible selon l'une des revendications 1 à 5, dans lequel l'échangeur thermique (1) comporte des moyens de déplacement des sondes thermiques flexibles (10) pour augmenter la déformation et/ou le déplacement des sondes thermiques (10) dans l'écoulement,
ces moyens de déplacement étant :
- mécaniques,
- optiques,
- acoustiques, ou
- électromagnétiques.

7. Echangeur thermique (1) flexible selon l'une des revendications 1 à 6, dans lequel le ou les canaux périphériques (12) ont une largeur de taille millimétrique.

8. Echangeur thermique (1) flexible selon l'une des revendications 1 à 6, dans lequel le ou les canaux périphériques (12) ont une largeur de taille micrométrique.

9. Echangeur thermique (1) flexible selon l'une des revendications précédentes, dans lequel le rapport entre : la surface extérieure totale d'échange thermique du canal périphérique (12) et le volume de fluide caloporteur se déplaçant dans le canal périphérique (12), est compris entre : 5000 et 20000 m²/m³.

10. Echangeur thermique (1) flexible selon l'une des revendications précédentes, dans lequel chaque sonde thermique flexible (10) est associée à un manchon de connexion (20) apte à connecter fluidiquement :
- le ou les canaux périphériques (12) à un seul premier tube (21) logé dans le manchon de connexion (20) et permettant l'arrivée, respectivement la sortie, du fluide caloporteur, et
- et le canal central (11) à un seul second tube (22) logé dans le manchon de connexion (20) et permettant la sortie, respectivement l'arrivée, du fluide caloporteur.

11. Echangeur thermique (1) flexible selon l'une des revendications précédentes, dans lequel le matériau de la sonde thermique flexible (10) a une conductivité thermique inférieure ou égale à 1 W/m.K.

12. Echangeur thermique (1) flexible selon l'une des revendications précédentes 1, 3 à 11, dans lequel la sonde thermique flexible (10) présente deux conduites coaxiales avec une conduite extérieure coaxiale à une conduite intérieure, le canal central (11) étant situé dans la conduite intérieure, et le canal périphérique (12) étant situé entre les parois de la conduite extérieure et les parois de la conduite intérieure.

13. Echangeur thermique (1) flexible selon l'une des revendications précédentes, dans lequel l'échangeur thermique (1) présente entre 2 et 100 sondes thermiques flexibles (10).

14. Echangeur thermique (1) flexible selon l'une des revendications précédentes, dans lequel les sondes thermiques (10) présentent un ou plusieurs polymères choisi(s) parmi la liste suivante :
- un élastomère ;
- un polymère thermoplastique ou thermodurcissable ou à un de leur mélange, tel que du silicone (e.g. polydiméthylsiloxane), du caoutchouc (e.g. polyisoprène), du polyuréthane, une polyoléfine (e.g. basse densité) ou du polystyrène ;
- un polymère fluoré tel que PTFE (polytetrafluoroethylene)
- un matériau composite.

15. Echangeur thermique selon l'une des revendications 1 à 14, présentant des dimensions et un matériau pour être utilisé en chirurgie d'intervention, par exemple en cryogénie pour viser les tumeurs cancéreuses.

16. Ensemble comprenant :
- l'échangeur thermique (1) défini selon l'une des revendications 1 à 15,
- et une canalisation, dans laquelle est disposé l'échangeur thermique (1).

17. Ensemble selon la revendication 16, dans lequel la canalisation présente une seule ouverture permettant de disposer l'échangeur thermique (1) dans l'écoulement d'eau de la canalisation et dans lequel les entrée (14) et sortie (15) du fluide caloporteur sont positionnées pour toutes les sondes thermiques flexibles (10) à la même extrémité proximale (P) d'une sonde thermique flexible (10).

## Patentansprüche

1. Flexibler Wärmetauscher (1) zur Anordnung in einem sich bewegenden externen Fluid, umfassend:
- mehrere flexible, strömungstechnisch parallel geschaltete Temperaturfühler (10) zur Anordnung in der Strömung des externen Fluids und zur Verbindung mit Antriebsmitteln, um Folgendes zu ermöglichen:
• die Zirkulation eines Wärmeträgerfluids in den flexiblen Temperaturfühlern (10) und
• einen Wärmeaustausch zwischen dem Wärmeträgerfluid und dem externen Fluid, wobei der Durchfluss des Wärmeträgerfluids in den flexiblen Temperaturfühlern (10) aufgeteilt wird,
wobei jeder flexible Temperaturfühler (10) mit einer Längsform aus einem Polymermaterial besteht und Folgendes aufweist:
∘ einen zentralen Kanal (11) mit einer zentimetergroßen oder kleineren Breite des Durchgangsquerschnitts;
∘ einen oder mehrere periphere Kanäle (12) zu dem zentralen Kanal (11), die jeweils den gleichen Querschnitt für den Durchgang des Wärmeträgerfluids aufweisen und jeweils zumindest teilweise durch eine Wärmetauschwand zwischen dem externen Fluid und dem Wärmeträgerfluid gebildet werden,
wobei der periphere Kanal oder die peripheren Kanäle (12) eine Breite des Durchgangsquerschnitts aufweisen, die geringer ist als die Breite des Durchgangsquerschnitts des zentralen Kanals (11),
wobei sich der Durchfluss des Wärmeträgerfluids in dem zentralen Kanal (11) auf die peripheren Kanälen verteilt, wenn der flexible Temperaturfühler (10) mehrere periphere Kanäle (12) aufweist;
und wobei der Wärmetauscher (1) für jeden flexiblen Temperaturfühler (10) umfasst:
- ein Verbindungsendstück (13), das sich an einem distalen Ende (D) des flexiblen Temperaturfühlers (10) befindet und den zentralen Kanal (11) und den peripheren Kanal oder die peripheren Kanäle (12) strömungstechnisch verbindet, wobei die Zirkulationsrichtung des Wärmeträgerfluids in dem flexiblen Temperaturfühler (10) zwischen dem zentralen Kanal (11) und dem peripheren Kanal bzw. den peripheren Kanälen (12) umgekehrt wird;
und wobei jeder flexible Temperaturfühler (10) aus einem verformbaren Polymermaterial besteht, das sich in der Strömung des externen Fluids verformen und/oder zwischen verschiedenen Positionen bewegen kann, um den Austausch von Wärmeenergie zwischen dem in dem Temperaturfühler (10) zirkulierenden Wärmeträgerfluid und dem externen Fluid der Strömung zu erhöhen.

2. Flexibler Wärmetauscher (1) nach Anspruch 1, wobei jeder flexible Temperaturfühler (10) mehrere periphere Kanäle (12) umfasst, die durch flexible Rohre gebildet werden, die von dem flexiblen Innenrohr getrennt sind, das den zentralen Kanal (11) bildet, und um das flexible Innenrohr, das den zentralen Kanal (11) bildet, herum angeordnet sind, wobei jeder periphere Kanal (12) einen Durchgangsquerschnitt für das Wärmeträgerfluid aufweist, der kleiner ist als derjenige des zentralen Kanals (11).

3. Flexibler Wärmetauscher (1) nach einem der Ansprüche 1 oder 2, wobei jeder flexible Temperaturfühler (10) aus einem verformbaren Polymermaterial besteht, das sich bei niederfrequenten Bewegungen von weniger als 100 Hz verformen kann.

4. Flexibler Wärmetauscher (1) nach einem der Ansprüche 1 bis 3, wobei jeder flexible Temperaturfühler (10) aus einem verformbaren Polymermaterial besteht, das sich in der Strömung schlangenförmig verformen kann.

5. Flexibler Wärmetauscher (1) nach einem der Ansprüche 1 bis 3, wobei jeder flexible Temperaturfühler (10) aus einem verformbaren Polymermaterial besteht, das sich verformen kann:
- in einer Hin- und Herbewegung; und/oder
- in Schwingungen.

6. Flexibler Wärmetauscher (1) nach einem der Ansprüche 1 bis 5, wobei der Wärmetauscher (1) Mittel zum Bewegen der flexiblen Temperaturfühler (10) umfasst, um die Verformung und/oder die Bewegung der Temperaturfühler (10) in der Strömung zu verstärken, wobei diese Mittel zum Bewegen
- mechanisch,
- optisch,
- akustisch oder
- elektromagnetisch
sind.

7. Flexibler Wärmetauscher (1) nach einem der Ansprüche 1 bis 6, wobei der periphere Kanal oder die peripheren Kanäle (12) eine millimetergroße Breite aufweisen.

8. Flexibler Wärmetauscher (1) nach einem der Ansprüche 1 bis 6, wobei der periphere Kanal oder die peripheren Kanäle (12) eine mikrometergroße Breite aufweisen.

9. Flexibler Wärmetauscher (1) nach einem der vorstehenden Ansprüche, wobei das Verhältnis zwischen der gesamten äußeren Wärmeaustauschfläche des peripheren Kanals (12) und dem Volumen des sich in dem peripheren Kanal (12) bewegenden Wärmeträgerfluids zwischen 5.000 und 20.000 m²/m³ beträgt.

10. Flexibler Wärmetauscher (1) nach einem der vorstehenden Ansprüche, wobei jeder flexible Temperaturfühler (10) einer Verbindungsmuffe (20) zugeordnet ist, die strömungstechnisch verbinden kann:
- den peripheren Kanal oder die peripheren Kanäle (12) mit einem einzigen ersten Rohr (21), das sich in der Verbindungsmuffe (20) befindet und den Eintritt bzw. den Austritt des Wärmeträgerfluids ermöglicht, und
- den zentralen Kanal (11) mit einem einzigen zweiten Rohr (22), das sich in der Verbindungsmuffe (20) befindet und den Austritt bzw. den Eintritt des Wärmeträgerfluids ermöglicht.

11. Flexibler Wärmetauscher (1) nach einem der vorstehenden Ansprüche, wobei das Material des flexiblen Temperaturfühlers (10) eine Wärmeleitfähigkeit aufweist, die kleiner oder gleich 1 W/m-K ist.

12. Flexibler Wärmetauscher (1) nach einem der vorstehenden Ansprüche 1, 3 bis 11, wobei der flexible Temperaturfühler (10) zwei koaxiale Leitungen mit einer äußeren Leitung, die koaxial zu einer inneren Leitung ist, aufweist, wobei der zentrale Kanal (11) in der inneren Leitung angeordnet ist und der periphere Kanal (12) zwischen den Wänden der äußeren Leitung und den Wänden der inneren Leitung angeordnet ist.

13. Flexibler Wärmetauscher (1) nach einem der vorstehenden Ansprüche, wobei der Wärmetauscher (1) zwischen 2 und 100 flexible Temperaturfühler (10) aufweist.

14. Flexibler Wärmetauscher (1) nach einem der vorstehenden Ansprüche, wobei die Temperaturfühler (10) ein oder mehrere Polymere aufweisen, ausgewählt aus der folgenden Liste:
- ein Elastomer;
- ein thermoplastisches oder duroplastisches Polymer oder eine Mischung davon, wie Silikon (z. B. Polydimethylsiloxan), Gummi (z. B. Polyisopren), Polyurethan, ein Polyolefin (z. B. mit niedriger Dichte) oder Polystyrol;
- ein Fluorpolymer wie PTFE (Polytetrafluorethylen);
- ein Verbundmaterial.

15. Wärmetauscher nach einem der Ansprüche 1 bis 14 mit Abmessungen und aus einem Material zur Verwendung in der interventionellen Chirurgie, beispielsweise in der Kryotechnik zur Bekämpfung von Krebstumoren.

16. Anordnung umfassend:
- den Wärmetauscher (1) nach einem der Ansprüche 1 bis 15, und
- eine Rohrleitung, in der der Wärmetauscher (1) angeordnet ist.

17. Anordnung nach Anspruch 16, wobei die Rohrleitung eine einzige Öffnung aufweist, die es ermöglicht, den Wärmetauscher (1) in der Wasserströmung der Rohrleitung anzuordnen, und wobei sich der Eintritt (14) und der Austritt (15) des Wärmeträgerfluids für alle flexiblen Temperaturfühler (10) an dem gleichen proximalen Ende (P) eines flexiblen Temperaturfühlers (10) befinden.

## Claims

1. A flexible heat exchanger (1) intended to be disposed in a moving external fluid, comprising:
- several flexible temperature probes (10) fluidly mounted in parallel, intended to be disposed in the flow of the external fluid, and to be coupled to drive means to allow:
• the circulation of a heat transfer fluid in the flexible temperature probes (10) and
• a heat exchange between the heat transfer fluid and the external fluid, the flow rate of the heat transfer fluid being distributed in the flexible temperature probes (10),
wherein each flexible temperature probe (10), of longitudinal shape, being made of polymer material, and having:
o a central channel (11), with a centimeter-sized passage cross section width or smaller;
o one or several peripheral channels (12) to the central channel (11), each having the same cross section for the passage of the heat transfer fluid and each formed at least in part by a heat exchange wall between the external fluid and the heat transfer fluid,
the peripheral channel(s) (12) having a width of the passage cross section smaller than the width of the passage cross section of the central channel (11),
the flow rate of the heat transfer fluid in the central channel (11) being distributed in the peripheral channels when the flexible temperature probe (10) has several peripheral channels (12);
and wherein the heat exchanger (1) includes, for each flexible temperature probe (10):
- a connection end piece (13), located at a distal end (D) of the flexible temperature probe (10), and fluidly connecting the central channel (11) and the peripheral channel(s) (12), the direction of circulation of the heat transfer fluid in the flexible temperature probe (10) being inverted between the central channel (11) and the peripheral channel(s) (12);
and wherein each flexible temperature probe (10) is made of deformable polymer material, able to deform and/or move between different positions, in the flow of the external fluid, to increase the thermal energy exchanges between the heat transfer fluid circulating in the temperature probe (10) and the external fluid of the flow.

2. The flexible heat exchanger (1) according to claim 1, wherein each flexible temperature probe (10) includes several peripheral channels (12) which are formed by flexible tubes separated from the flexible internal tube forming the central channel (11) and disposed around the flexible internal tube forming the central channel (11), each peripheral channel (12) having a cross section for the passage of the heat transfer fluid smaller than that of the central channel (11).

3. The flexible heat exchanger (1) according to any of claims 1 or 2, wherein each flexible temperature probe (10) is made of deformable polymer material able to deform following low frequency movements below 100 Hz.

4. The flexible heat exchanger (1) according to any of claims 1 to 3, wherein each flexible temperature probe (10) is made of deformable polymer material able to deform in a serpentine shape in the flow.

5. The flexible heat exchanger (1) according to any of claims 1 to 3, wherein each flexible temperature probe (10) is made of deformable polymer material able to deform:
- in a reciprocating movement; and/or
- in vibrations.

6. The flexible heat exchanger (1) according to any of claims 1 to 5, wherein the heat exchanger (1) includes means for moving the flexible temperature probes (10) to increase the deformation and/or the displacement of the temperature probes (10) in the flow, these displacement means being:
- mechanical,
- optical,
- acoustic, or
- electromagnetic means.

7. The flexible heat exchanger (1) according to any of claims 1 to 6, wherein the peripheral channel(s) (12) has/have a millimeter-sized width.

8. The flexible heat exchanger (1) according to any of claims 1 to 6, wherein the peripheral channel(s) (12) has/have a micrometer-sized width.

9. The flexible heat exchanger (1) according to any of the preceding claims, wherein the ratio between: the total external heat exchange surface of the peripheral channel (12) and the volume of heat transfer fluid moving in the peripheral channel (12) is comprised between: 5,000 and 20,000 m²/m³.

10. The flexible heat exchanger (1) according to any of the preceding claims, wherein each flexible temperature probe (10) is associated with a connection sleeve (20) able to fluidly connect:
- the peripheral channel(s) (12) to a single first tube (21) housed in the connection sleeve (20) and allowing the arrival, respectively the exit, of the heat transfer fluid, and
- and the central channel (11) to a single second tube (22) housed in the connection sleeve (20) and allowing the exit, respectively the arrival, of the heat transfer fluid.

11. The flexible heat exchanger (1) according to any of the preceding claims, wherein the material of the flexible temperature probe (10) has a thermal conductivity less than or equal to 1 W/m.K.

12. The flexible heat exchanger (1) according to any of the preceding claims 1, 3 to 11, wherein the flexible temperature probe (10) has two coaxial ducts with an external duct coaxial to an internal duct, the central channel (11) being located in the internal duct, and the peripheral channel (12) being located between the walls of the external duct and the walls of the internal duct.

13. The flexible heat exchanger (1) according to any of the preceding claims, wherein the heat exchanger (1) has between 2 and 100 flexible temperature probes (10).

14. The flexible heat exchanger (1) according to any of the preceding claims, wherein the temperature probes (10) have one or more polymer(s) chosen among the following list:
- an elastomer;
- a thermoplastic or thermosetting polymer or a mixture thereof, such as silicone (e.g. polydimethylsiloxane), rubber (e.g. polyisoprene), polyurethane, a polyolefin (e.g. low density) or polystyrene;
- a fluoropolymer such as PTFE (polytetrafluoroethylene)
- a composite material.

15. The flexible heat exchanger according to any of claims 1 to 14, having dimensions and a material to be used in interventional surgery, for example in cryogenics to target cancerous tumors.

16. An assembly comprising:
- the heat exchanger (1) defined according to any of claims 1 to 15,
- and a pipe, in which the heat exchanger (1) is disposed.

17. The assembly according to claim 16, wherein the pipe has a single opening allowing the heat exchanger (1) to be located in the water flow of the pipe and wherein the inlet (14) and outlet (15) of the fluid heat transfer fluid are positioned for all the flexible temperature probes (10) at the same proximal end (P) of a flexible temperature probe (10).
